(19) Europäisches Patentamt
European Patent Office
Office européen des brevets

(11) **EP 2 026 632 B1**

(12) **EUROPÄISCHE PATENTSCHRIFT**

(45) Veröffentlichungstag und Bekanntmachung des Hinweises auf die Patenterteilung:
**25.01.2017 Patentblatt 2017/04**

(51) Int Cl.:
*H05B 6/68* (2006.01)          *F24C 7/08* (2006.01)
*G01K 1/00* (2006.01)

(21) Anmeldenummer: **08014186.4**

(22) Anmeldetag: **08.08.2008**

(54) **Verfahren zur Bestimmung der Kerntemperatur eines Garguts und Gargerät zur Durchführung solch eines Verfahrens**

Method for determining core temperature of cooked food and cooking device to perform this method

Procédé de détermination de la température de noyau d'un article de cuisson et appareil de cuisson destiné à l'exécution d'un tel procédé

(84) Benannte Vertragsstaaten:
**CZ DE DK FR IT**

(30) Priorität: **17.08.2007   DE 102007039027**

(43) Veröffentlichungstag der Anmeldung:
**18.02.2009   Patentblatt 2009/08**

(73) Patentinhaber: **Rational AG**
**86899 Landsberg/Lech (DE)**

(72) Erfinder: **Schreiner, Thomas**
**86916 Kaufering (DE)**

(74) Vertreter: **Weber-Bruls, Dorothée et al**
**Jones Day**
**Nextower**
**Thurn-und-Taxis-Platz 6**
**60313 Frankfurt am Main (DE)**

(56) Entgegenhaltungen:
| | |
|---|---|
| EP-A1- 0 874 198 | EP-A1- 1 253 382 |
| EP-A1- 1 793 173 | EP-A1- 1 927 810 |
| EP-A1- 2 163 823 | EP-A2- 1 271 061 |
| EP-A2- 1 757 862 | EP-A2- 2 026 632 |
| EP-A2- 2 078 899 | EP-A2- 2 098 788 |
| WO-A1-02/23093 | WO-A1-93/16333 |
| WO-A1-2004/106899 | WO-A2-02/47522 |
| DE-A1- 10 306 940 | DE-A1- 19 718 399 |
| DE-A1-102006 048 753 | DE-C1- 10 109 246 |
| DE-U1- 20 321 133 | DE-U1- 29 923 215 |
| DE-U1-202005 017 251 | GB-A- 2 244 132 |
| US-A1- 2006 112 833 | US-B1- 6 753 027 |

**Beschreibung**

Die vorliegende Erfindung betrifft ein Verfahren zur Bestimmung der Kerntemperatur eines Garguts während eines Garprozesses in einem Gargerät, das mindestens einen Temperatursensor, eine Recheneinheit und einen Speicher umfaßt, sowie ein Gargerät zum Durchführen eines solchen Verfahrens.

Die Verwendung von Temperatursensoren zur Bestimmung der Temperatur eines Garguts, die wiederum zur Steuerung von Garprozessen verwendet wird, ist gut bekannt. Üblicherweise kommt dabei ein Temperatursensorspieß, der ein oder mehrere Thermoelemente und gegebenenfalls weitere Sensoren beinhaltet, zum Einsatz. Solch ein Temperatursensorspieß wird zu Beginn eines Garprozesses in ein Gargut eingeführt und erfaßt während des Garprozesses die Meßdaten, die den Zustand des Garguts charakterisieren sollen. Die Übertragung der Meßdaten erfolgt meist über ein Kabel zwischen dem Spieß und einer Recheneinheit des Gargeräts. Alternativ können die Daten auch per Sender und Empfänger, wie z. B. in der EP 0 687 866 A1 vorgeschlagen, übertragen werden. Die Erfassung der Daten dient hauptsächlich der Steuerung des Garprozesses aber auch der Dokumentation der ablaufenden Garprozesse hinsichtlich Hygienevorschriften.

Die WO 98/48679 offenbart ein Verfahren zum individuellen Führen eines Garprozesses, sowie ein dazugehörendes Gargerät. Der Garprozeß wird dabei in Abhängigkeit von einem oder mehreren Werten einer Ableitung einer Garzustandsgröße nach der Zeit während des Garprozesses geführt. Dazu werden Meßwerte an verschiedenen Stellen im Gargut zur Ermittlung der Kerntemperatur über einen Meßfühler in regelmäßigen Zeitabständen aufgenommen und gespeichert. Eine Auswerteeinheit bestimmt aus den aufgenommenen Werten die erste Ableitung der Kerntemperatur nach der Zeit. Die dort durchgeführten Rechenschritte dienen der Extrapolation des zeitlichen Verlaufs der Kerntemperatur. Anhand dieser Berechnungen soll also bestimmt werden, wie der Verlauf der Kerntemperatur über die Zeit in den nachfolgenden Zeitabschnitten sein wird. Dabei wird vorausgesetzt, daß eine der Meßstellen im oder am Kern des Garguts plaziert ist, also daß die richtige Kerntemperatur, das ist die niedrigste Temperatur im Gargut, mit Hilfe des Kerntemperaturfühlers direkt gemessen wird. Dazu wird eine Mittelung der verschiedenen aufgenommenen Temperaturwerte des Kerntemperaturfühlers durchgeführt, oder es wird die niedrigste Temperatur auf der Fühlernadel als Kerntemperatur definiert.

Aus der EP 0 601 137 B1 ist eine Temperaturmeßsonde bekannt, mit der die Temperatur in einem Gargut, das innerhalb eines Gargeräts gegart werden soll, bestimmt wird und die mehrere Temperaturmeßpunkte aufweist. Der dort beschriebene Ofen wird anhand des niedrigsten gemessenen Temperaturwerts des Garprozeßühlers geregelt.

Eine Berücksichtigung von Temperaturverläufen bei der Bestimmung der Kerntemperatur ist beispielsweise aus der DE 199 45 021 A1 bekannt.

Die DE 103 23 651 A1 offenbart einen Garprozessfühler, über den ein zeitlich veränderliches Temperaturfeld innerhalb eines Garguts erzeugbar und eine Vielzahl von Messwerten an zwei unterschiedlichen Positionen zur Bestimmung insbesondere einer Temperaturleitzahl und/oder einer spezifischen Wärmeleitfähigkeit erfassbar sind.

Die DE 196 09 116 A1 beschreibt ein gattungsgemäßes Verfahren zum Garen von Nahrungsmitteln, bei dem die Kerntemperatur mehrmals zu definierten Zeitpunkten abgetastet wird und aus den Abtastwerten ein Endzeitpunkt für den Garprozeß ermittelt wird. Dazu wird eine Lösung der Wärmeleitungsgleichung, und zwar in Form einer Näherungslösung für zylindrisch geformte Gargüter, verwendet, um einen funktionalen Zusammenhang zwischen der Zeit und der Temperatur herzustellen. Anhand der Temperaturwerte zu verschiedenen Zeitpunkten kann so auf den Verlauf der Temperaturkurve, also den Temperaturanstieg im Gargut, zurückgeschlossen werden. Da es sich bei der dort beschriebenen Lösung um eine Exponentialfunktion handelt, reichen drei Temperaturmeßwerte zu unterschiedlichen Zeitpunkten aus, um den Verlauf der Temperaturkurve prinzipiell abschätzen zu können. Mit Hilfe von fünf verschiedenen Temperaturwerten des Kerntemperaturfühlers sollen zu Beginn des Garprozesses fünf Variablen der Funktion, nämlich der Wärmeübergangskoeffizient, der Wärmeleitfähigkeitskoeffizient, die Dichte, die spezifische Wärmekapazität und der mittlere Radius des Garguts bestimmt werden. Diese Messungen werden im Lauf des Garprozesses mehrfach wiederholt, um auch eine Änderung der Parameter während des Garprozesses berücksichtigen zu können. Mit Hilfe der so bestimmten Exponentialfunktion wird dann der Endzeitpunkt des Garprozesses vorausberechnet.

Aus der Dissertation von Thomas Rossner zum Thema "Automatisierung des Garprozesses von Fleisch", TU Dresden, 1987, Seiten 55 bis 60 , ist ein Verfahren zur Berechnung eines Zeitpunkts bekannt, zu dem eine End-Kerntemperatur erreicht sein wird. Der theoretische zeitliche Temperaturverlauf wird dabei gemäss den Seiten 55 bis 59 mit Hilfe einer Lösung der Fourierschen Diffentialgleichung der Wärmeübertragung berechnet. Die experimentelle Bestimmung der Kerntemperatur erfolgt gemäss den Seiten 59 bis 60 anhand einer Temperaturmessung, wobei eine Messsonde mit 10 Ni/CrNi-Thermoelementen eingesetzt wird und die niedrigste Temperatur als Kerntemperatur definiert wird.

Nachteilig an dem hier aufgeführten Stand der Technik ist, dass bei einer fehlerhaften Bestimmung der Kerntemperatur, die aus einer fehlerhaften Plazierung des Temperatursensorspiesses im Gargut resultieren kann, eine falsche Kerntemperatur bestimmt wird und somit alle Berechnungen und Steuerungen, die auf den fehlerhaften Werten beruhen, zu Fehlern bei der Garprozesssteuerung führen. Ebenso kann es zu einer unzutreffenden Dokumentation des Kerntemperaturverlaufs für den Hygienestandard kommen. Dies wird immer dann der Fall sein, wenn keiner der Temperatursensoren des Temperatursensorspiesses den Kern des Garguts trifft.

Ein Garverfahren mit einer automatischen Garguterkennung ist aus der DE 101 20 136 A1 bekannt. Das Einsetzen eines Scanners zur Erfassung eines Strichcodes auf einer Verpackung eines Garguts zwecks Steuerung eines Garverfahrens ist aus der DE 42 167 18 A1 bekannt.

US 2006/0112833 A1 beschreibt eine Cluster-Analyse zum Zuordnen eines Garprozesses zu einer bestimmten Klasse von Garprozessen, wobei eine Durchführung des Garprozesses in Abhängigkeit von der bestimmten Klasse erfolgt.

EP 1 253 382 A1 betrifft eine in Teilflächen unterteilte Grill-/Heizfläche für Gargut, bei der mittels Sensoren belegte und nicht belegte Teilflächen erkannt und nur belegte Teilflächen erhitzt werden.

DE 197 18 399 A1 beschreibt ein Verfahren zur Steuerung eines Garvorgangs, bei dem die erste und zweite zeitliche Ableitung einer Zustandsgröße, insbesondere der Kerntemperatur, erfasst und als Steuerungsparameter verwendet wird. Eine Abschätzung der Kerntemperatur erfolgt mittels eines in ein Gargut eingebrachten Temperaturfühlers mit mehreren Temperatursensoren durch Mittelung der gemessenen Temperaturen oder Auswahl der tiefsten gemessenen Temperatur.

WO 93/16333 A1 beschreibt einen Messfühler zur Bestimmung der Temperatur in einem Gargut, umfassend drei Temperatursensoren, die dreieckig oder sternförmig zueinander angeordnet sind.

EP 1 757 862 A2 betrifft einen Temperaturmessfühler mit mehreren Temperatursensoren zur Verwendung in einem Mikrowellenofen.

DE 203 21 133 U1 und DE 103 06 940 A1 beschreiben jeweils einen Backprozessfühler mit einer Mehrzahl von Temperatursensoren.

DE 101 09 246 C1 offenbart einen Garprozessfühler zur Bestimmung der Farbe im Inneren eines Garguts.

EP 0 874 198 A1 beschreibt ein Verfahren und eine Vorrichtung zum gleichmäßigen Erwärmen einer Mehrzahl von Nahrungsmittelstücken in einer Garvorrichtung, insbesondere einem Mikrowellengerät. Temperatursensoren werden jeweils in ein einer Wärmequelle nächstgelegenes und am weitesten entferntes Nahrungsmittelstück sowie in ein Nahrungsmittelstück mit dem größen und kleinsten Durchmesser eingebracht. Die ermittelten Temperaturen werden mit einer Solltemperatur verglichen und es erfolgt eine Steuerung der Wärmequelle in Abhängigkeit von den Temperaturdifferenzen.

GB 2 244 132 A betrifft einen Messfühler zum Einbringen in ein bereits gegartes Gargut, um eine Temperaturverteilung im Inneren des Garguts zu bestimmen und nicht ausreichend erwärmte Gebiete innerhalb des Garguts zu lokalisieren. Der Messfühler umfasst entlang seiner Länge Abschnitte mit thermosensitiven Flüssigkristallen, die je nach Temperatur eine bestimmte Farbe annehmen. Aus der Farbverteilung entlang des Messfühlers kann die Temperaturverteilung im Inneren des Garguts abgelesen werden.

EP 1 793 173 A1 beschreibt die Verwendung eines Messfühlers mit mehreren Temperatursensoren zur Steuerung eines Gargeräts, wobei der Messfühler auch dann verwendet wird, wenn einige der Temperatursensoren außerhalb des Garguts angeordnet sind und die Kerntemperatur oberhalb der Garraumtemperatur liegt. Dazu ist vorgesehen, dass außerhalb des Garguts angeordnete Temepratursensoren erkannt und zur Bestimmung der Kerntemperatur nicht herangezogen werden.

WO 2004/106899 A1 erläutert eine Messvorrichtung zum Ermitteln einer Farbe und Temperatur im Inneren eines Garguts, wobei Messwerte mittels eines neuronalen Netzwerks ausgewertet werden. Die Temperaturbestimmung erfolgt mittels thermosensitiver Flüssigkristalle, deren Farbe mittels eines optischen Erfassungssystems gemessen wird.

EP 1 271 061 A2 beschreibt einen Messfühler mit einer Mehrzahl von Temperatursensoren und eine Hülle zur Aufnahme des Messfühlers, wobei bei in die Hülle eingesetztem Messfühler einige der Temperatursensoren thermisch von einem Garraum entkoppelt sind und andere der Temperatursensoren thermisch an den Garraum gekoppelt sind, um zu detektieren, ob der Messfühler in die Hülle eingesteckt ist.

Die nicht vorveröffentlichte EP 1 927 810 A1 beschreibt ein Verfahren, bei dem eine Messung der Kerntemperatur eines Garguts durchgeführt wird und aus dem Zeitverlauf der Kerntemperatur vorausgesagt wird, wann eine vorgegebene Kerntemperatur erreicht sein wird.

DE 20 2005 017 251 U1 beschreibt einen Garprozessfühler mit mehreren Temperatursensoren und einem Anschlag.

WO 02/47522 A2 betrifft die Erkennung einer Fehlstechung oder Nichtstechung eines Garprozessfühlers in ein Gargut durch Auswertung der gemessenen Temperatur-Zeit-Verläufe und deren zeitlicher Ableitung.

WO 02/23093 A1 beschreibt ein Verfahren zur Bestimmung der verbliebenen Restmengen an Bakterien in einem Gargut durch Messung des Temperaturverlaufs im Gargut mittels eines Messfühlers mit mehreren Temperatursensoren und elektronische Auswertung der Messwerte auf Basis von mathematischen Funktionen.

Aufgabe der vorliegenden Erfindung ist es daher, ein Verfahren zur Bestimmung der Kerntemperatur eines Garguts anzugeben, mit dem die Nachteile des Stands der Technik überwunden werden. Insbesondere soll eine genauere Abschätzung der

tatsächlichen Kerntemperatur auch bei schlecht plaziertem Kerntemperaturmessfühler im Vergleich zum Stand der Technik ermöglicht werden.

Die Aufgabe wird erfindungsgemäß durch ein Verfahren mit den Merkmalen des Anspruchs 1 gelöst. Dabei ist vorgesehen, daß zumindest zwei Randbedingungen für die Lösung der Wärmeleitungsgleichung über eine Eingabeeinrichtung und/oder eine Einleseeinrichtung des Gargeräts und/oder eine Einleseeinrichtung eines mit dem Gargerät in Wirkverbindung stehenden Geräts vorgegeben und/oder durch Auswertung von Messdaten wenigstens eines weiteren Sensors während des Garprozesses bestimmt und/oder durch aus vorherigen Garprozessen gewonnenen Erfahrungswerten festgelegt werden.

Dabei kann vorgesehen sein, daß die bestimmte Kerntemperatur zur Steuerung des Garprozesses verwendet und/oder auf einer Anzeigeeinrichtung, insbesondere des Gargeräts, angezeigt und/oder, vorzugsweise im Speicher, gespeichert wird.

Auch wird mit der Erfindung vorgeschlagen, daß die Randbedingungen aus der Grösse des Garguts, der Form des Garguts, dem Gewicht des Garguts, dem Typ des Garguts, der Art des Garguts, der Wärmekapazität des Garguts, der thermischen Diffusivität im Gargut, der Wärmeleitfähigkeit des Garguts, der spezifischen Wärme des Garguts, der Temperatur an der Oberfläche des Garguts, der Temperatur eines Garmediums im Gargerät, dem Wärmeübertrag von einem Garmedium auf das Gargut, der Dichte des Garguts, der Position des Garguts im Garraum, der Anzahl an Gargutstücken, der Oberflächenstruktur des Garguts und/oder der Vorbehandlung des Garguts ausgewählt werden.

Dabei ist in einer besonders bevorzugten Ausführungsform vorgeschlagen, daß die Form des Garguts und die thermische Diffusivität des Garguts oder die Form des Garguts und die Wärmeleitfähigkeit des Garguts als Randbedingungen, zumindest näherungsweise, vorgegeben, bestimmt und/oder festgelegt werden.

Dabei kann insbesondere vorgesehen sein, daß die Temperatur der Oberfläche des Garguts der Siedetemperatur von Wasser, insbesondere 100 °C, gleichgesetzt wird.

Auch wird mit der Erfindung vorgeschlagen, daß als Parameter der Lösung der Wärmeleitungsgleichung normierte, dimensionslose Grössen für die Zeit, den Ort im Gargut und/oder den Wärmeübergang von einem Garmedium auf das Gargut zur Bestimmung der Kerntemperatur verwendet wird bzw. werden.

Mit einer weiteren Ausführungsform wird vorgeschlagen, daß von einem homogenen Gargut ausgegangen wird.

In einer vorteilhaften Ausführungsform der Erfindung wird vorgeschlagen, daß eine instationäre Wärmeleitungsgleichung zu Grunde gelegt wird, die wie folgt näherungsweise lösbar ist:

a) bei plattenförmigen Gargütern, wie Schnitzeln, Steaks, Blechkuchen oder dergleichen

$$\theta(\xi, Bi, Fo) = \sum_{k=1}^{\infty} \frac{2 \cdot \sin(q_k)}{q_k + \sin(q_k) \cdot \cos(q_k)} \cdot \cos(-q_k^2 Fo) \cdot \exp(-q_k^2 Fo) \quad \text{(Gleichung 4)},$$

wobei $\xi = \dfrac{x}{L}$ eine dimensionslose Ortskoordinate ist, die von dem Ort in der Platte x in Richtung senkrecht zu den Flächen der Platte und der halben Dicke der Platte $L$ abhängt; $Bi = \dfrac{\alpha \cdot L}{\lambda}$ die Biot-Zahl, mit $\alpha \cdot L$ als dem Wärmeleitwiderstand und $\lambda$ als dem Wärmeübergangswiderstand der Oberfläche; $Fo = \dfrac{a \cdot t}{L^2}$ die Fourier-Zahl, mit der Temperaturleitfähigkeit oder der thermischen Diffusivität $a$ und der Zeit $t$ und den Eigenwerten $q_k$, die durch $q_k = (k - \frac{1}{2}) \cdot \pi$ gegeben sind, oder

b) bei zylindrischen Gargütern, wie Würsten, Schweinelenden, Auberginen oder dergleichen

$$\theta(\xi, Bi, Fo) = \sum_{k=1}^{\infty} \frac{2 J_1(q_k)}{q_k \cdot \left[ J_0^2(q_k) + J_1^2(q_k) \right]} \cdot J_0(q_k \xi) \cdot \exp(-q_k^2 Fo) \quad \text{(Gleichung 5)},$$

wobei $\xi = \dfrac{x}{R_z}$ eine dimensionslose Ortskoordinate ist, die vom Abstand vom Mittelpunkt des Zylinders x und dem Radius des Zylinders $R_Z$ abhängt; mit den Besselfunktionen $J_i$, oder

c) bei kugelförmigen Gargütern, wie Großbraten, Kochschinken, Kartoffelknödel oder dergleichen

$$\theta(\xi, Bi, Fo) = 2 \cdot \sum_{k=1}^{\infty} \frac{\sin(q_k) - q_k \cos(q_k)}{q_k - \sin(q_k) \cdot \cos(q_k)} \cdot \frac{\sin(-q_k \xi)}{q_k \xi} \cdot \exp(-q_k^2 Fo) \quad \text{(Gleichung 6)},$$

oder

$$\theta(\xi, Bi, Fo) = 2 \cdot \sum_{k=1}^{\infty} (-1)^{k+1} \cdot \frac{\sin(-q_k \xi)}{q_k \xi} \cdot \exp(-q_k^2 Fo) \quad \text{(Gleichung 7)},$$

wobei $\xi = \dfrac{x}{R}$ eine dimensionslose Ortskoordinate ist, die vom Abstand vom Mittelpunkt der Kugel x und dem Radius der Kugel $R_Z$ abhängt; den Eigenwerten $q_k$, die durch $q_k = k \cdot \pi$ gegeben sind; mit der Fourier-Zahl und der Biot-Zahl, die für die Kugel durch $Fo = \dfrac{a \cdot t}{R^2}$; $Bi = \dfrac{\alpha \cdot R}{\lambda}$ gegeben sind.

Dabei kann insbesondere vorgesehen sein, daß eine effektive Dicke eines Garguts bei einer Platten-Form, ein effektiver Radius eines Garguts bei einer Zylinder-Form und ein effektiver Radius eines Garguts bei einer Kugelform über das Verhältnis aus Volumen und Oberfläche des Garguts bestimmt wird.

Auch wird mit der Erfindung vorgeschlagen, daß der Beginn des Anstiegs der Temperatur, die Geschwindigkeit des Anstiegs der Temperatur und/oder die Beschleunigung des Anstiegs der Temperatur aus den Meßdaten des Temperatursensors ausgewertet wird bzw. werden.

In einer alternativen Ausführungsform kann vorgesehen sein, daß die Lösung der Wärmeleitungsgleichung während des Garprozesses verbessert wird durch Auswertung der Meßdaten des weiteren Sensors.

Zusätzlich wird mit der Erfindung vorgeschlagen, daß über den weiteren Sensor, insbesondere in Form eines optischen Sensorsystems, die Form, Größe, Position und/oder Farbe des Garguts, insbesondere in Form eines Gassensorsystems der chemische Zustand des Garguts über die Gasatmosphäre des Garraums, insbesondere in Form eines Temperatursensors die Oberflächentemperatur des Garguts oder die Garraumtemperatur, insbesondere in Form eines Feuchtesensors die Feuchte in der Garraumatmosphäre, insbesondere in Form eines Impedanzsensors der elektrische Zustand des Garguts und/oder, insbesondere in Form eines Ultraschallsensors die Form, Größe und/oder Position des Garguts bestimmt wird bzw. werden.

Auch kann vorgesehen sein, daß eine Vorgabe zumindest einer Randbedingung durch Auswahl über ein Bedienmenu auf einer Bedienoberfläche am Gargerät, einer Fernbedienung des Gargeräts und/oder einem mit dem Gargerät verbundenen Computer erfolgt.

Ferner ist bevorzugt, daß die Vorgabe zumindest einer Randbedingung durch Einlesen eines Codes, wie in Form eines Strichcodes, oder über Funk, insbesondere über einen RFID-Chip, erfolgt.

In einer alternativen Ausführungsform kann vorgesehen sein, daß das Programm, mit dem das Gargut gegart wird, als Randbedingung vorgegeben, bestimmt und/oder festgelegt wird oder aus den vorgegebenen, bestimmten und/oder festgelegten Randbedingungen bestimmt wird.

Dabei kann vorgesehen sein, daß ein bestimmtes Programm angezeigt wird und/oder verändert werden kann.

Dabei kann des weiteren vorgesehen sein, daß während eines Garprozesses das Programm in Abhängigkeit von Meßdaten des Temperatursensors und/oder des weiteren Sensors geändert wird.

Auch wird erfindungsgemäß vorgeschlagen, daß die Lösung und/oder das Lösungsverfahren der Wärmeleitungsgleichung von der Anzahl und der Art der bestimmten Randbedingungen abhängt.

Ferner kann vorgesehen sein, daß zumindest zwei Temperatursensoren im Inneren des Garguts plaziert werden.

Dabei kann vorgesehen sein, daß ein Vergleich der aus den Meßdaten der Temperatursensoren berechneten Kerntemperaturen durchgeführt wird, um daraus eine Abschätzung für die Güte der Kerntemperaturbestimmung, Informationen zu dem Gargut und/oder weitere und/oder veränderte Randbedingungen für die Lösung der Wärmeleitungsgleichung zu erhalten.

Dabei wird insbesondere vorgeschlagen, daß die Güte der Kerntemperaturbestimmung, die Information zu dem Gargut und/oder die Randbedingungen für die Lösung der Wärmeleitungsgleichung nach Veränderung der Randbedingungen erneut berechnet, angezeigt und/oder gespeichert werden.

Ferner ist dabei besonders bevorzugt, daß die Veränderung und Berechnung sooft wiederholt werden, bis die berechneten Werte auf einen Endwert zu konvergieren.

Dabei kann insbesondere vorgesehen sein, daß die zumindest zwei Temperatursensoren im Gargut einen bekannten Abstand voneinander haben, und aus dem Abstand der Temperatursensoren die Wärmeleitung im Gargut bei bekannter Größe und Form des Garguts oder die Größe des Garguts bei bekannter Form und Wärmeleitung des Garguts bestimmt wird.

Auch kann vorgesehen sein, daß zumindest drei Temperatursensoren auf einer Geraden innerhalb des Garguts plaziert werden können, wobei die Meßdaten der Temperatursensoren zur Bestimmung eines Temperaturgradienten im Inneren des Garguts, des zeitlichen Verlaufs des Temperaturgradienten, des Zeitpunkts, bei dem sich ein definierter Temperaturgradient einstellt, und/oder der Kerntemperatur des Garguts berücksichtigt werden.

In einer weiteren Ausführungsform kann vorgesehen sein, daß die Meßdaten jedes Temperatursensors, die Meßdaten des weiteren Sensors und/oder die vorgegebenen, bestimmten, festgelegten und/oder veränderten Randbedingungen und/oder die Lösungen der ausgewählten Wärmeleitungsgleichungen gespeichert werden können, insbesondere zusammen mit einer Programmbezeichnung.

Des weiteren wird die Aufgabe erfindungsgemäß gelöst durch ein Gargerät zur Behandlung eines Garguts in einem Garraum, umfassend wenigstens einen im Garraum plazierbaren Temperatursensor, der zur Bestimmung der Temperatur an wenigstens einer beliebigen Stelle im Inneren des Garguts geeignet ist, eine Recheneinheit, einen Speicher und eine Heizeinrichtung, zum Durchführen eines Verfahrens nach einem der vorangehenden Ansprüche.

Dabei ist bevorzugt, daß zumindest einen zusätzlichen Sensor, insbesondere ausgewählt aus einem Gassensorsystem zur Bestimmung des chemischen Zustands des Garguts über die Gasatmosphäre des Garraums, einem optischen Sensorsystem zur Bestimmung der Form, Größe, Position und/oder Farbe des Garguts, einem ersten Temperatursensor zur Bestimmung der Oberflächentemperatur des Garguts, einem zweiten Temperatursensor zur Bestimmung des Garraumtemperatur, einem Feuchtesensor zur Bestimmung der Feuchte in der Garraumatmosphäre, einem Impedanzsensor zur Bestimmung des elektrischen Zustands des Garguts und/oder einem Ultraschallsensor zur Bestimmung der Form, Größe und/oder Position des Garguts.

Dabei kann insbesondere vorgesehen sein, daß zumindest eine Eingabeeinrichtung, eine Anzeigeeinrichtung und/oder eine Leseeinrichtung, jeweils in Wirkverbindung mit der Recheneinheit.

Auch kann vorgesehen sein, daß die Eingabeeinrichtung und die Anzeigeeinrichtung in einem Bedienelement bereitgestellt sind, und/oder die Leseeinrichtung zum Lesen eines Strichcodes und/oder eines RFID-Chips geeignet ist.

In einer alternativen Ausführungsform, kann vorgesehen sein, daß zumindest zwei in dem Gargut plazierbare Temperatursensoren vorgesehen sind, wobei die zumindest zwei Temperatursensoren vorzugsweise an oder in einem Temperatursensorspieß jeweils in einem definierten Abstand voneinander angeordnet sind.

Dabei wird mit der Erfindung auch vorgeschlagen, daß zumindest drei in einem Gargut plazierbare Temperatursensoren vorgesehen sind.

Schließlich wird mit der Erfindung vorgeschlagen, daß eine Kühleinrichtung, eine Einrichtung zum Zuführen von Feuchtigkeit in den Garraum, eine Einrichtung zum Abführen von Feuchtigkeit aus dem Garraum, eine Einrichtung zum Zirkulieren von Garraumatmosphäre, einen Wärmespeicher, eine Garraumtür mit Türkontaktschalter und/oder eine Reinigungseinrichtung.

Der Erfindung liegt somit die überraschende Erkenntnis zu Grunde, daß durch eine geeignete Wahl von Randbedingungen einer Garguterwärmung geeignete Näherungslösungen der Wärmeleitungsgleichung für das Gargut auffindbar sind, mit denen es möglich ist, durch Erfassung des Temperaturanstiegs, also des zeitlichen Verlaufs der Temperatur über die Zeit, an einer beliebigen Stelle im Inneren des Garguts auf die Temperatur im Kern des Garguts zurückzuschließen. Die Randbedingungen zur Lösung der Wärmeleitungsgleichung können dabei aus Messungen mit zusätzlichen Sensoren, Eingaben am Gargerät, allgemeine Erfahrungen und anhand zuvor abgelaufener Garprozesse gewonnen werden.

Die Kerntemperatur eines Garguts ist der kälteste Punkt in dem Gargut, der sich üblicherweise im Schwerpunkt bzw. im geometrischen Zentrum des Garguts befindet. Wird ein Gargut aus einer Kühleinrichtung entnommen und in den Garraum eines Gargeräts eingebracht, wird Wärme über Konvektion eines Garmediums im Gargerät oder durch Strahlung auf das Gargut übertragen. Das Garmedium kann in einem Kombidämpfer Luft oder Dampf bzw. eine Mischung daraus sein, wobei der Dampf beim Kondensieren am Gargut einen zusätzlichen Beitrag zur Wärmeübertragung liefert. Im Fall eines Garens in einem Topf ist heißes Wasser oder im Fall eines Garraums einer Friteuse ist heißes Fett das Garmedium. Wärme wird dabei stets von Außen in das Gargut eingleitet und diffundiert anschließend, dem Temperaturgradienten im Inneren des Garguts folgend, in Richtung zum Kern des Garguts. Dies gilt nicht bei Mikrowellengargeräten, bei denen die Wärme im Gargut erzeugt wird. Für große Gargüter stimmt die Betrachtung jedoch in guter Näherung, wenn der Durchmesser des Garguts groß gegen die Eindringtiefe der Mikrowelle in das Gargut ist und die Wärme daher in der Nähe der Oberfläche des Garguts erzeugt wird. In einem solchen Fall kann das erfindungsgemäße Verfahren zur Anwendung kommen, zum Beispiel bei einem Mikrowellengargerät, da die Erwärmung dann zumindest näherungsweise von außen nach innen erfolgt. Sobald die Temperatur im Kern des Garguts zu steigen beginnt, ist die Kerntemperatur immer die niedrigste Temperatur im Gargut, solange das Gargut aufgeheizt wird.

Die Diffusion von thermischer Energie (Wärme) in das Gargut wird im Allgemeinen durch eine Diffusionsgleichung, die eine partielle Differentialgleichung ist, beschrieben. Als Wärmeleitungsgleichung oder Diffusionsgleichung ist die folgende Formel gut bekannt:

$$\frac{\partial}{\partial t}u(\vec{r},t) = a \cdot \Delta u(\vec{r},t) \tag{1}$$

Dabei ist *u* die Temperaturverteilung, die von der Ortskoordinate r und der Zeit *t* abhängt, *T* die Temperatur, *a* die Temperaturleitfähigkeit oder thermische Diffusivität, und $\Delta$ der Laplace-Operator, der die zweite örtliche Ableitung in alle Raumrichtungen bewirkt.

Für eine ebene Platte, die eine Näherung beispielsweise für ein Steak darstellen kann, läßt sich daraus eine eindimensionale instationäre Wärmeleitungsgleichung herleiten, die leicht zu lösen ist, insbesondere unter der Ausnahme, daß keine Wärmequellen in dem betrachteten Raumabschnitt vorkommen. Die ebene Platte ist immer dann eine gute Näherung, wenn das Gargut scheibenförmig ist, und die Dicke der Scheibe klein gegen deren Querschnitt ist. Die eindimensionale instationäre Wärmeleitungsgleichung ohne Wärmequellen lautet:

$$\frac{\partial}{\partial t}u(x,t) = a \cdot \frac{\partial^2}{\partial x^2}u(x,t) \tag{2}$$

Dabei ist x als Koordinate senkrecht zur Fläche der Platte angesetzt.

Gleichung (2) und deren Lösung sind in der Literatur bekannt, so z. B. in Norbert Elsner et al., Grundlagen der technischen Thermodynamik, Band 2, Wärmeübertragung, Akademieverlag GmbH, Berlin 1993, Seiten 83 - 94. Zur Lösung der Differentialgleichung werden dort dimensionslose Größen eingeführt:

Die dimensionslose Ortskoordinate $\xi$

$$\xi = \frac{x}{L}; \quad (0 \leq \xi \leq 1),$$

wobei *L* die halbe Dicke der Platte ist,
die dimensionslose oder relative Übertemperatur $\theta$

$$\theta = \frac{T-T_0}{T_1-T_0}; \quad (0 \leq \theta \leq 1),$$

wobei $T_0$ die Temperatur des Garguts zu Beginn des Garprozesses und $T_1$ die Temperatur des Garraums ist, die Fourier-Zahl als dimensionslose Zeit *Fo*

$$Fo = \frac{a \cdot t}{L^2};$$

und die Biot-Zahl als dimensionsloser Wärmeübergang *Bi*

$$Bi = \frac{\alpha \cdot L}{\lambda},$$

7

mit $\alpha \cdot L$ als dem Wärmeleitwiderstand und $\lambda$ als dem Wärmeübergangswiderstand der Oberfläche. So erhält man eine Ähnlichkeitsdarstellung der Differentialgleichung (2) mit Rand- und Anfangsbedingungen, die für die analytische Lösung und praktische Anwendung besonders zweckmäßig ist:

$$\frac{\partial \theta}{\partial Fo} = \frac{\partial^2 \theta}{\partial \xi^2} \qquad (3)$$

Als Lösung ergibt sich daraus nach Elsner et al.:

$$\theta(\xi, Bi, Fo) = \sum_{k=1}^{\infty} \frac{2 \cdot \sin(q_k)}{q_k + \sin(q_k) \cdot \cos(q_k)} \cdot \cos\left(-q_k^2 Fo\right) \cdot \exp\left(-q_k^2 Fo\right) \qquad (4)$$

mit den für die Lösung geeigneten Eigenwerten $q_k = (k - \tfrac{1}{2}) \cdot \pi$. Wie man sofort sieht, konvergiert die unendliche Reihe gemäß Gleichung (4) auf Grund des exponentiellen Terms mit negativem Exponenten. Zur tatsächlichen Berechnung reicht es also aus, lediglich die ersten Glieder der Reihe zu berücksichtigen.

Durch Gleichung (4) ist also die genaue Verteilung der Temperatur in Abhängigkeit von der dimensionslosen Zeit und dem dimensionslosen Ort gegeben. Interessanterweise ergeben sich einfache Lösungen für die Wandtemperatur

$$\theta_W = \theta(Bi, Fo) \ (\xi = 1)$$

und für die Kerntemperatur

$$\theta_K = \theta(Bi, Fo) \ (\xi = 0).$$

Für einen unendlich langen Zylinder lautet die Lösung der dazu passenden Differentialgleichung

$$\theta(\xi, Bi, Fo) = \sum_{k=1}^{\infty} \frac{2 J_1(q_k)}{q_k \cdot \left[J_0^2(q_k) + J_1^2(q_k)\right]} \cdot J_0(q_k \xi) \cdot \exp\left(-q_k^2 Fo\right) \qquad (5)$$

mit den bekannten Besselfunktionen $J_i$. Der dimensionslose Ort $\xi$ ist für den Fall eines Zylinders durch das Verhältnis von dessen Abstand vom Mittelpunkt des Zylinders x zum Radius des Zylinders $R_Z$ gegeben:

$$\xi = \frac{x}{R_z}$$

Dadurch gilt wie für den Fall der ebenen Platten $0 \leq \xi \leq 1$ im Inneren des Zylinders, wobei $\xi = 0$ für den Kern des Zylinders und $\xi = 1$ für die Oberfläche des Zylinders gilt. Für die dimensionslose Zeit, die durch die Fourier-Zahl $Fo$ gegeben ist, und den dimensionslosen Wärmeübergang, der durch die Biot-Zahl $Bi$ gegeben ist, gilt dann:

$$Fo = \frac{a \cdot t}{R_z^2}; \quad Bi = \frac{\alpha \cdot R_z}{\lambda}$$

Für eine Kugel, die im Falle von Gargut eine breite Anwendung findet, ergibt sich folgende Gleichung für die Temperaturverteilung

$$\theta(\xi, Bi, Fo) = 2 \cdot \sum_{k=1}^{\infty} \frac{\sin(q_k) - q_k \cos(q_k)}{q_k - \sin(q_k) \cdot \cos(q_k)} \cdot \frac{\sin(-q_k \xi)}{q_k \xi} \cdot \exp(-q_k^2 Fo) \qquad (6),$$

die sich noch weiter vereinfachen läßt zu:

$$\theta(\xi, Bi, Fo) = 2 \cdot \sum_{k=1}^{\infty} (-1)^{k+1} \cdot \frac{\sin(-q_k \xi)}{q_k \xi} \cdot \exp(-q_k^2 Fo) \qquad (7)$$

Die Eigenwerte $q_k$ sind hier durch $q_k = k \cdot \pi$ gegeben. Der dimensionslose Ort $\xi$ ist für den Fall der Kugel durch das Verhältnis von dessen Abstand vom Mittelpunkt des Zylinders $x$ zum Radius des Zylinders R gegeben:

$$\xi = \frac{x}{R}$$

Dadurch gilt wie für den Fall der ebenen Platten und des Zylinders $0 \le \xi \le 1$ im Inneren der Kugel, wobei $\xi = 0$ für den Kern der Kugel und $\xi = 1$ für die Oberfläche der Kugel gilt.
Die dimensionslose Zeit $Fo$ und der dimensionslosen Wärmeübergang $Bi$ sind für den Fall der Kugel mit dem Radius R gegeben durch

$$Fo = \frac{a \cdot t}{R^2}; \quad Bi = \frac{\alpha \cdot R}{\lambda}.$$

Für die Temperaturleitfähigkeit oder thermische Diffusivität $a$ gilt

$$a = \frac{\lambda_W}{c_p \cdot \rho},$$

mit $\lambda_W$ als der Wärmeleitfähigkeit, $c_p$ als der spezifischen Wärme bei konstantem Druck und $\rho$ als der Dichte des Materials des Körpers.
Auch die hier beschriebenen unendlichen Reihen konvergieren stark, so daß die Berechnung z. B. nach dem 8. Glied oder auch schon früher z. B. nach dem 6. oder 4. Glied der Reihe abgebrochen werden kann. Für Geometrien, die zwischen den hier vorgestellten Lösungen liegen, lassen sich folgende Ansätze finden, die auf dem Verhältnis des Volumens $V$ Des Körpers zu dessen wärmeübertragender Oberfläche A basieren:

Ein Körper, der am ehesten einer ebenen Platte entspricht, kann durch $L = \dfrac{V}{A}$ angenähert werden (z. B. Steaks, Schnitzel oder Blechkuchen);

für Körper, die einem unendlich langen Zylinder am ehesten ähneln, ist $R = \dfrac{2V}{A}$ anzusetzen (z. B. Würste, Schweinelende am Stück oder Aubergine); und

für Körper, die am ehesten einer Kugel ähneln, gilt $R = \dfrac{3V}{A}$ (z. B. Großbraten, Kochschinken oder Kartoffelknödel).

Mit diesen Formeln ist es möglich, auch bei unbekannter Wärmeleitfähigkeit die Temperatur im Kern eines Garguts mit Hilfe der Randbedingungen $\xi = 0$ zu bestimmen. Als weitere Randbedingungen sind noch anzunehmen, daß die Wärmekapazität sowie die Wärmeleitfähigkeit im Inneren des Garguts konstant sind und zumindest grob eine der hier aufgeführten Geometrien vom Gargut verwirklicht wird. Durch eine numerische Berechnung sind aber auch für andere Formen Temperaturverläufe im Gargut bestimmbar.

Der Temperaturverlauf im Inneren eines homogenen Garguts ist also bei vorgegebener Form und vorgegebenen Randbedingungen an der Oberfläche des Garguts charakteristisch für einen Garfortschritt und hängt auf einer geeignet normierten Zeit- und Temperaturskala nur vom Ort der Erfahrung im Gargut ab. Durch diesen charakteristischen Verlauf läßt sich bei zumindest näherungsweise bekannter Form also der Ort eines Temperatursensors in einem Gargut bestimmen. Mit Hilfe dieses Ortes läßt sich wiederum der Temperaturverlauf im Kern des Garguts berechnen.

Prinzipiell läßt sich auch näherungsweise die Form des Garguts bestimmen, indem der gemessene Temperaturverlauf mit den möglichen Temperaturverläufen für verschiedene bekannte Formen verglichen wird. Durch einen Vergleich der normierten Zeitskala mit der tatsächlichen Zeitskala lassen sich Informationen über thermische Eigenschaften und Größe des Garguts ableiten.

Eine zusätzliche Vereinfachung ergibt sich, wenn angenommen wird, daß die Temperatur an der Oberfläche des Garguts $T_1$ = 100 °C oder genauer der Siedetemperatur des Wasser entspricht. Diese Annäherung gilt eigentlich für einen Bereich direkt unter der Oberfläche des Garguts, der unter einer ausgetrockneten Kruste liegt, die im Laufe des Garprozesses die Bräunung des Lebensmittels annimmt. Diese ausgetrocknete Kruste ist jedoch so dünn und thermisch so gut an die Schicht mit Siedetemperatur angekoppelt, daß die Näherung für die Oberfläche praktisch genau gilt. Die Temperatur der Oberfläche des Garguts steigt im wesentlichen nicht über die Siedetemperatur des Wasser, da die meisten Lebensmittel einen großen Anteil Wasser enthalten und die Verdampfung des Wassers an deren Oberfläche, wegen der großen Verdampfungswärme des Wassers, also dem relativ großen Energiebetrag, der zur Verdampfung von Wasser notwendig ist, zu einer Stabilisierung der Oberflächentemperatur führt. Diese Näherung ist besonders gut bei größeren Lebensmittelstücken erfüllt, da die Zeit, in der die Oberflächentemperatur des Garguts die Siedetemperatur des Wassers erreicht, also von der Ausgangstemperatur $T_0$ auf $T_1$ steigt, im Vergleich zur gesamten Garzeit sehr klein ist.

Dann spielt die Wirkung der isolierenden Schicht des Garmediums, die durch den Wärmeleitwiderstand mitbestimmenden Wert $\alpha$ ausgedrückt wird, keine Rolle mehr. Die Lösung der Wärmeleitungsgleichung ist nicht mehr vom Wärmeübergang des Garmediums auf das Gargut abhängig, und die Biot-Zahl *Bi* kann als feste Konstante angenommen werden. Somit sind die Gleichungen (4), (5), (6) und (7) nicht mehr von der Biot-Zahl abhängig. Die Abhängigkeit der Gleichungen von der Biot-Zahl kann dann also vernachlässigt werden.

Das Gleiche gilt, wenn beim Dämpfen Wasser an der Oberfläche eines Garguts kondensiert. Auch dann ist die Annahme, daß die Temperatur der Oberfläche des Garguts bei der Siedetemperatur des Wassers liegt, eine geeignete Randbedingung. Die Biot-Zahl, die den Wärmeübergang beschreibt, spielt dann also auch keine Rolle mehr.

Findet ein Garen bei einer Temperatur unterhalb der Siedetemperatur des Wassers statt, so kann auch die Abhängigkeit vom Wärmeübergang, also der Biot-Zahl, bei den Lösungen der Wärmeleitungsgleichung berücksichtigt werden. Dabei wird dann z. B. die Abhängigkeit der $\alpha$-Zahl von der Strömungsgeschwindigkeit des Garmediums berücksichtigt, um zu einer realistischen Abschätzung der Biot-Zahl zu kommen.

Annäherungen, wie die zur Biot-Zahl *Bi* getroffenen Annahmen, stellen eine akzeptable Vereinfachung des hier aufgeführten Problems der Temperaturverteilung in Abhängigkeit von der Zeit in einem Gargut dar. So lassen sich mit Hilfe des erfindungsgemäßen Verfahrens bessere Werte für die Kerntemperatur bestimmen, als wenn die Temperatur eines Temperatursensors einfach mit der Kerntemperatur gleichgesetzt oder gemäß anderer Verfahren, die im Stand der Technik vorgeschlagen werden, bestimmt wird.

Alternativ zu allgemeinen Annahmen, die die Randbedingungen der Wärmeleitungsgleichung definieren, lassen sich auch spezifischere Randbedingungen finden, indem z. B. Informationen bei der Auswahl des geeigneten Garprogramms durch den Kunden ausgewertet werden, gezielte Abfragen zum Gargut verwendet werden, Messungen weiterer Temperatursensoren im Gargut verwendet werden und/oder die Meßergebnisse anderer Sensoren ausgewertet werden.

Weitere Merkmale und Vorteile der Erfindung ergeben sich aus der nachstehenden Beschreibung, in der Ausführungsbeispiele der Erfindung anhand von schematischen Zeichnungen im einzelnen erläutert werden.

Dabei zeigt:

Figur 1    ein Gargut im Querschnitt mit einem Kerntemperatursensor;

Figur 2    den qualitativen Temperaturverlauf in einem plattenförmigen Gargut der Dicke 450 mm zu einem Zeitpunkt $t_3$;

Figur 3    den qualitativen Temperaturverlauf in einem plattenförmigen Gargut der Dicke 300 mm zu einem Zeitpunkt $t_3$;

Figur 4    den qualitativen Temperaturverlauf in einem plattenförmigen Gargut der Dicke 200 mm zu einem Zeitpunkt $t_3$;

Figur 5    die qualitativen Temperaturverläufe in dem plattenförmigen Gargut der Dicke 300 mm von Figur 3 zu den Zeitpunkten $t_1$, $t_2$, $t_3$ und $t_4$;

Figur 6    die quantitativen zeitabhängigen Temperaturkurven für eine Kugel mit dem Radius R; und

Figur 7    ein erfindungsgemäßes Gargerät.

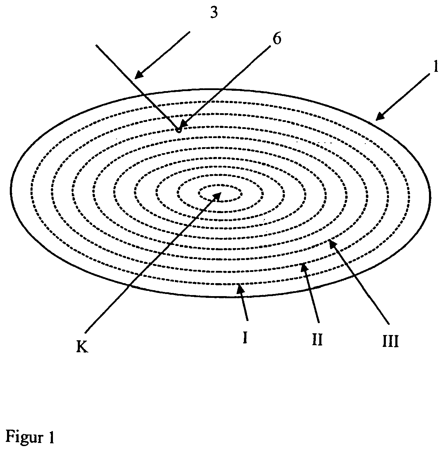

Figur 1 zeigt ein Gargut 1 mit ovalem Querschnitt, in das ein Temperatursensorspieß 3, an dessen Spitze ein einziger Temperatursensor 6 angebracht ist, eingebracht wurde. Die gestrichelten Linien im Inneren des Garguts 1 können einerseits die Isothermen im Gargut 1 während des Aufheizens des Garguts 1 darstellen, und können andererseits die Eindringtiefe der von außen eindiffundierenden Wärme in das Gargut 1 während der Anfangsphase des Garens symbolisieren.

Ein solches Aufwärm-Model ist z. B. für einen Großbraten zu wählen, dessen Form in guter Nährung einem Elypsoid entspricht. Dies kann unter anderem daran erkannt werden, daß ein Anwender ein Garprogramm für Großbraten mit Hilfe einer Bedienoberfläche an einem Gargerät auswählt, oder auch durch Auswertung der Signale eines optischen Sensors oder eines Ultraschallsensors, zur Bestimmung der Größe und Form des Garguts 1. Als weitere Randbedingungen werden angenommen, daß die Temperatur $T_0$ im Inneren des Garguts 1 zur Startzeit $t_0$ überall gleich ist und dem Gargut 1 von Außen ein gleichmäßiger Wärmeeintrag aufgeprägt wird. Letztere Annahme kann jedoch modifiziert werden, wenn beispielsweise bestimmte Asymmetrien des Wärmeeintrags im Gargerät bekannt sind, eine entsprechende Kundeneingabe getätigt wird oder durch die Messungen mit den Sensoren nahegelegt wird, daß kein gleichmäßiger Wärmeeintrag an der Oberfläche des Garguts 1 stattfindet.

Die Wärme dringt dann beim Aufwärmen zunächst von Außen in das Gargut 1 ein. Zu einem Zeitpunkt $t_1$ wird die äußerste gestrichelte Linie I mit Wärme beaufschlagt, während die Temperatur an der Spitze des Temperatursensorspieß 3 entspricht noch der Ausgangstemperatur des Garguts 1. Zum Zeitpunkt $t_2$ beginnt die Temperatur an der zweiten gestrichelten Linie II von außen zu steigen. Zum Zeitpunkt $t_3$ beginnt die Temperatur an der dritten gestrichelten Linie III von außen zu steigen. Somit beginnt zu diesem dritten Zeitpunkt $t_3$ auch die Temperatur des Temperatursensors 6 an der Spitze des Temperatursensorspießes 3 erstmals zu steigen. Die Zeitdifferenz zwischen dem Beginn des Garprozesses und dem Beginn des Anstiegs der Temperatur am Temperatursensor 6, $t_3-t_0$, beinhaltet also bereits eine erste Information zur Einstecktiefe des Temperatursensors 6 und zur Wärmeleitfähigkeit des Garguts 1. Bei bekannter Wärmeleitfähigkeit liefert der Zeitpunkt $t_3$ des ersten erfaßten Temperaturanstiegs also direkt eine Information über die Position des Temperatursensors 6 im Gargut 1. Der Wärmeeintrag im Gargut 1 pflanzt sich, wie oben beschrieben, immer weiter fort und erreicht schließlich auch den Kern K des Garguts 1.

Die für den Braten identifizierte Form des Elypsoids entspricht am ehesten der einer Kugel, so daß Gleichung (7) zur Berechnung der Kerntemperatur verwendet werden kann. Dabei wird als Radius für die Kugel das dreifache Volumen des Elypsoids geteilt durch dessen Oberfläche angesetzt.

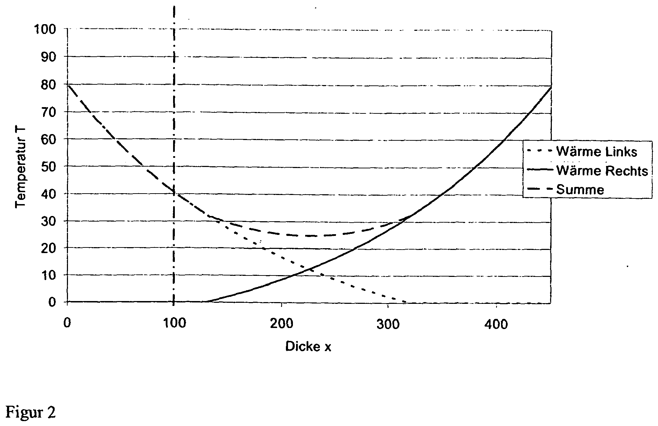

Figur 2 zeigt qualitativ die Temperaturverteilung in einer Platte, die eine gute Näherung für flache Lebensmittel darstellt, mit der Dicke 450 mm zu einem Zeitpunkt $t_3$, die sich aus der Summe der Wärmeeinträge von der rechten und der linken Seite der Platte ergibt. Die Wärmeeinträge von den beiden Seiten sind durch einfache Exponentialfunktionen genähert, um den prinzipiellen Verlauf der Temperaturverteilung darzustellen.

Wie in Figur 2 zu erkennen ist, ist in den Randbereichen zwischen 0 mm und 130 mm bzw. 320 mm und 450 mm noch keine Wirkung des Wärmeeintrags von der jeweils gegenüberliegenden Seite zu erkennen. In dem Bereich zwischen 130 mm und 320 mm, also in der Mitte des Garguts, ist aber bereits die Wirkung von der jeweils anderen Seite an dem Anstieg der Temperatur in diesem Bereich des Garguts zu erkennen. Ist die Wärmeleitfähigkeit des Garguts bekannt, läßt sich aus der Information über den zeitlichen Verlauf der Temperatur eines im Gargut plazierten Temperatursensors bei bekannter Form des Garguts (hier einer Platte), auf die Position des Temperatursensors im Gargut zurückschließen. Befindet sich der Temperatursensor im Beispiel nach Figur 2 in einer Einstecktiefe von 100 mm im Gargut, so ist zum Zeitpunkt $t_3$ zwar bereits eine Aussage über die Einstecktiefe des Temperatursensors möglich, aber noch keine Aussage über die Dicke des Garguts, da die Wärme von der anderen Seite noch nicht bis zu dem Temperatursensor vorgedrungen ist.

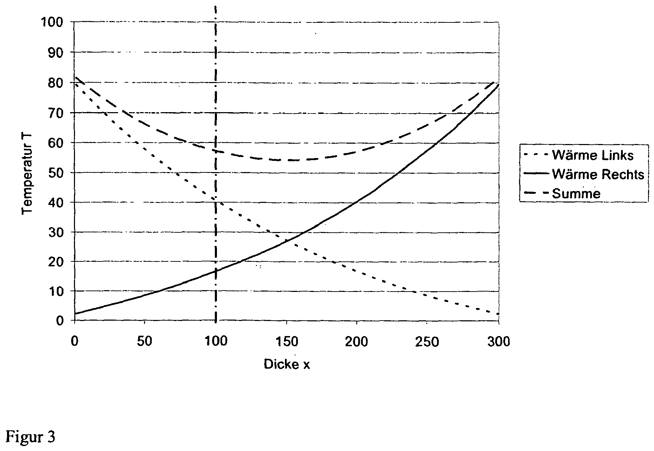

Figur 3 zeigt die qualitative Temperaturverteilung im Inneren eines plattenförmigen Lebensmittels mit einer geringeren Dicke (300 mm) als im Falle der Figur 2, jedoch zum gleichen Zeitpunkt $t_3$, wieder als Summe der von links und rechts eindringenden Wärme in das Gargut, wobei auch die Wärmeleitfähigkeit und die Wärmekapazität des Garguts wie im Falle der Figur 2 gewählt ist. Die Figuren 2 und 3 unterscheiden sich also lediglich in der Dicke des jeweiligen Garguts. Ein Temperatursensor in einer Einstecktiefe von 100 mm in Figur 3 mißt, im Gegensatz zu dem in Figur 2, bereits eine deutliche Abweichung des Temperaturanstiegs, da die Differenz zwischen dem Temperaturverlauf von der nur von einer Seite kommenden Wärme und der Summe der beiden Temperaturverläufe, die dem tatsächlichen Temperaturverlauf in der Platte entspricht, bei der Einstecktiefe von 100 mm in der Größenordnung von 15 °C liegt. Aus dieser Beschleunigung des Temperaturanstiegs, der durch den Wärmeeintrag von der gegenüber liegenden Seite verursacht wird, läßt sich also auf die Dicke des Garguts zurückschließen. Da die Temperaturverteilung im Inneren des Garguts mit Hilfe von Gleichung (4) abschätzbar ist, läßt sich so auf die Temperatur im Zentrum des Garguts bei 150 mm zurückschließen und ein guter Wert für die Kerntemperatur des Garguts finden.

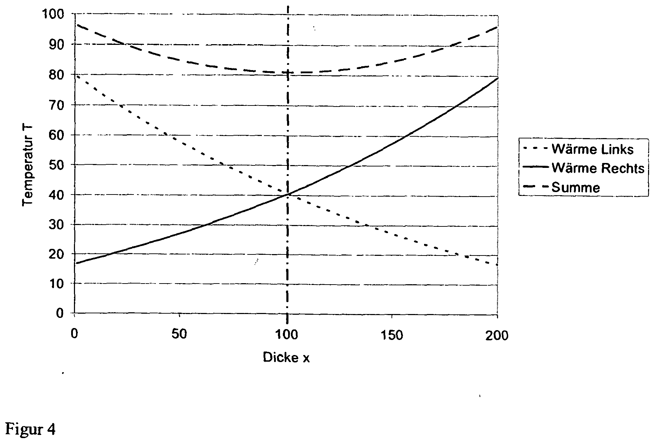

Figur 4 zeigt den qualitativen Temperaturverlauf in einem Gargut mit den Eigenschaften wie im Zusammenhang mit den Figuren 2 und 3 bereits beschrieben, jedoch mit einer Dicke von 200 mm, zum Zeitpunkt $t_3$. Wiederum ergibt

sich die Temperaturverteilung als Summe der von rechts und links eindringenden Wärme in das Gargut. Die Überhöhung der Temperatur in einer Einstecktiefe von 100 mm, die hier genau der Kerntemperatur entspricht, also die Abweichung der Temperaturerhöhung, die durch einen Wärmeeintrag von lediglich einer Seite verursacht würde, beträgt hier ungefähr 40 °C zum Zeitpunkt $t_3$.

Anhand der Figuren 2, 3 und 4 ist also gut zu erkennen, daß bei bekannter Form, Wärmeleitfähigkeit und Wärmekapazität des Garguts eine sehr gute Abschätzung über die Position eines Temperatursensors im Gargut und somit auf die Kerntemperatur des Garguts anhand der zeitlichen Entwicklung der Temperatur der Meßstelle gelingt.

Bei anderen Geometrien von Gargütern können noch weitere Beiträge zum Wärmeeintrag in das Gargut zum Temperaturanstieg an einer bestimmten Stelle im Gargut beitragen. Bei einem kugelförmigen Gargut kämen z. B. auch noch Beiträge der Wärmeflüsse von allen Seiten der Kugel, senkrecht zur Verbindungslinie der Temperaturmeßstelle und dem Mittelpunkt der Kugel hinzu, so daß mit einer stärkeren Überhöhung und auch mit einer früheren Überhöhung des Temperaturanstiegs zu rechnen ist. Dennoch bleibt der Zeitpunkt des Beginns des Temperaturanstiegs, die Geschwindigkeit des Temperaturanstiegs und die Beschleunigung des Temperaturanstiegs bei bekannter Form, Wärmeleitfähigkeit und Wärmekapazität des Garguts ein Maß für die Position der Meßstelle im Gargut, für die Größe des Garguts und für die Kerntemperatur des Garguts.

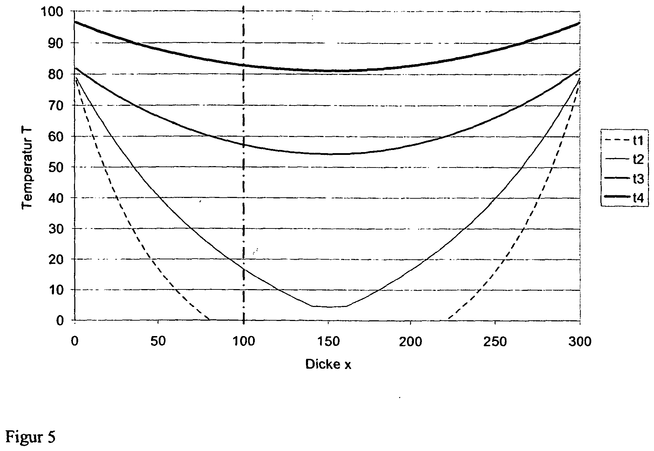

Figur 5 zeigt den qualitativen Temperaturverlauf in einem plattenförmigen Gargut (nicht gezeigt) der Dicke 300 mm zu unterschiedlichen Zeitpunkten $t_1$, $t_2$, $t_3$ und $t_4$. Zum Zeitpunkt $t_0$ liegt die Temperatur überall im Gargut gleichmäßig bei 0 °C. Zu diesem Zeitpunkt wird ein nicht gezeigter Temperatursensor in 100 mm Tiefe im Gargut plaziert. Zum Zeitpunkt $t_1$ ist die Temperatur im Gargut zwar bereits in den Randzonen angestiegen, an der Meßstelle jedoch noch nicht. Irgendwann zwischen den Zeitpunkten $t_1$ und $t_2$ beginnt die Temperatur der Meßstelle zu steigen.

Bei bekannter Wärmeleitfähigkeit und Wärmekapazität sowie bei bekannter Form des Garguts läßt sich aus dem Zeitpunkt des Beginns des Temperaturanstiegs abschätzen, daß die Temperaturmeßstelle 100 mm von der Oberfläche des Garguts entfernt positioniert ist, und daß das Gargut mindestens 200 mm dick sein muß. Zum Zeitpunkt $t_2$ ist die Temperatur der Meßstelle bereits um 18 °C angestiegen.

Aus der Geschwindigkeit des Temperaturanstiegs ist abschätzbar, daß die Temperaturerhöhung ausschließlich durch einen Wärmeeintrag von einer einzigen Seite stattgefunden haben kann, während die Temperatur aber bereits über 150 mm in das Gargerät eingedrungen sein muß. Daraus ist zum Zeitpunkt $t_2$ der Schluß zu ziehen, daß die Dicke des Garguts zumindest 250 mm betragen muß. Irgendwann zwischen den Zeitpunkten $t_2$ und $t_3$ beschleunigt sich der Temperaturanstieg an der Meßstelle, abweichend von dem bei einseitigem Temperatureintrag in das Gargut. Dies wird genau dann beginnen, wenn der Wärmeeintrag von der Seite, die der Seite gegenüber liegt, die der Meßstelle am nächsten ist, auch einen Beitrag zum Anstieg der Temperatur der Meßstelle liefert.

Die Beschleunigung des Temperaturanstiegs an der Meßstelle wird anhand der zeitlichen Entwicklung der Temperatur an der Meßstelle erkannt. Daraus läßt sich die Dicke des Garguts berechnen, so daß mit Hilfe von Gleichung (4), unter der Voraussetzung, daß der dimensionslose Ort $\xi$ gleich Null ist, die Temperatur im Kern des Garguts berechnet werden kann.

Die qualitativen Verläufe der Figuren 2 bis 5, die mit Hilfe einfacher e-Funktionen und deren Überlagerung gewonnen wurden, stellen keine exakten Kurvenverläufe gemäß Gleichung (4) dar und dienen lediglich der Veranschaulichung eines Prinzips, das zu einer erfindungsgemäßen Lösung des Problems der Kerntemperaturbestimmung führt. Eine exakte Lösung für eine Kugel nach Gleichung (7) wird im folgenden besprochen.

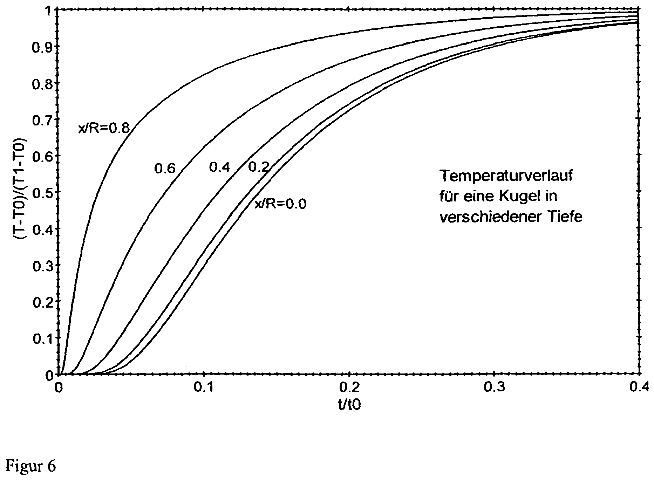

Figur 6 zeigt die quantitativen zeitabhängigen Temperaturkurven $T(\xi, t)$ für eine Kugel, deren Oberfläche zum Zeitpunkt $t_0$ von der anfänglichen Temperatur $T_0$ auf die Temperatur $T_1$ erwärmt wurde. Falls die Erwärmung nicht sprunghaft erfolgt, aber in einem gegenüber der Gesamtzeit kurzen Zeitraum, muß der Zeitpunkt $t_0$ geeignet in die Erwärmungsphase gelegt werden. Dies hat Auswirkungen auf die Form der Temperaturkurve an Orten nahe der Oberfläche $\xi = 1$. Der Einfluß auf die Temperaturverläufe im Inneren des Körpers ist jedoch gering. Die Kurven sind mit Gleichung (7) berechnet.

Der Parameter $t_0$ bestimmt die Zeitskala des Temperaturverlaufs und dient der Normierung der dimensionslosen Zeit, genauer gesagt der Fourier-Zahl $Fo$:

$$Fo = \frac{a \cdot t}{R^2} = \frac{t}{t_0} \quad \Rightarrow \quad t_0 = \frac{R^2}{a}$$

Die in Figur 6 gezeigten Kurven sind mit $\xi = \dfrac{x}{R}$ parametrisiert, wobei R der Radius der Kugel und x der Abstand vom Mittelpunkt der Kugel ist. Für den Fall eines Garguts in einem Garraum ist x also der Abstand der Temperaturmeßstelle vom Kern eines kugelförmigen Garguts.

Durch den Vergleich der in Figur 6 gezeigten, also nach Gleichung (7) berechneten Kurven mit einem beispielsweise in einem Aufbau nach Figur 1 mit Hilfe eines Temperatursensors 6, der mit einem Temperatursensorspieß 3 in ein Gargut 1 eingebracht wurde, gemessenen Temperaturverlauf läßt sich der Parameter $t_0$ bestimmen. Dieser Parameter $t_0$ ist eine thermische Zeitkonstante, die das Gargut charakterisiert. Mit der Hilfe von weiteren bekannten Daten, z. B. der thermischen Diffusivität, die für viele Lebensmittel ähnlich ist, läßt sich wiederum die Größe der Kugel bestimmen.

Falls weitere Temperaturmeßkurven an anderen Orten im Gargut bekannt sind, können diese zusammen mit der Information, daß beide auf derselben Zeitskala ablaufen, zur Verbesserung der Bestimmung der Kerntemperatur genutzt werden. Ist auch noch der Abstand zwischen den Orten von weiteren Temperatursensoren bekannt, wie beispielsweise in einem Kerntemperaturfühler, kann dies ebenfalls zu einer Bestimmung der Größe der Kugel herangezogen werden, wenn Annahmen über die Lage der Temperatursensoren gemacht werden können. Die Temperatursensoren könnten z. B. näherungsweise auf einer Linie mit dem Mittelpunkt der Kugel liegen, da angenommen werden kann, daß ein Anwender den Kern eines zu garenden Garguts beim Plazieren treffen möchte.

Für den Fall einer Kugel lassen sich mit den Gleichungen (6) oder (7) also für bestimmte normierte Orte $\xi = \dfrac{x}{R}$ in der Kugel bestimmte normierte Zeitpunkte $Fo = \dfrac{t}{t_0}$ finden, bei denen die normierte Temperatur $\theta = \dfrac{T - T_0}{T_1 - T_0}$ den Wert 0,02 bzw. 0,2 erreicht.

Diese Zusammenhänge sind in der folgenden Tabelle zusammen mit dem Quotienten der normierten Zeitpunkte angegeben:

| $\xi = \dfrac{x}{R}$ | $Fo\ (\theta = 0{,}2)$ | $Fo\ (\theta = 0{,}02)$ | $\dfrac{Fo(T = 0{,}2)}{Fo(T = 0{,}02)}$ |
|---|---|---|---|
| 0,8 | 0,010 | 0,0034 | 2,94 |
| 0,6 | 0,033 | 0,0126 | 2,62 |
| 0,4 | 0,059 | 0,0256 | 2,30 |
| 0,2 | 0,078 | 0,0386 | 2,02 |
| 0 | 0,084 | 0,0448 | 1,88 |

Wie in der Tabelle zu erkennen ist, kann der normierte Ort ξ bestimmt werden, ohne die thermische Zeitkonstante $t_0$ zu kennen. Daraus läßt sich der Temperaturverlauf im Mittelpunkt der Kugel, also im Kern des kugelförmigen Garguts bei ξ = 0 berechnen.

Eine weitere Verbesserung der Kerntemperaturbestimmung ergibt sich, wenn die Temperatur nicht einfach gemäß der Tabelle anhand von zwei Werten an zwei Stellen im Gargut zu zwei Zeitpunkten abgelesen wird, sondern statt dessen ein geeigneter numerischer Fit an die gemessene Temperaturkurven, die in Figur 6 dargestellt sind, nach Gleichung (6) oder (7) oder einer anderen Näherungslösung durchgeführt wird. Die Verbesserung resultiert daraus, daß dann die Informationen aus dem gesamten Temperaturverlauf in die Berechnung eingehen, und nicht nur der Wert an zwei Stellen.

Für andere Geometrien, wie die der Platte nach Gleichung (4) oder die des Zylinders nach Gleichung (5) oder für Zwischenlösungen hierzu, kann das erfindungsgemäße Verfahren zur Kerntemperaturbestimmung gleichsam angewendet werden. Es ist auch möglich, die Wärmeleitungsgleichung (1) für andere Geometrien numerisch zu lösen und diese zur Berechnung der Kentemperatur zu verwenden. Dazu kann die Form der Oberfläche des Garguts gemessen und mit einem Fit durch eine Funktion angenähert werden, um diese Funktion als Randbedingung für die Lösung der Wärmeleitungsgleichung zu verwenden.

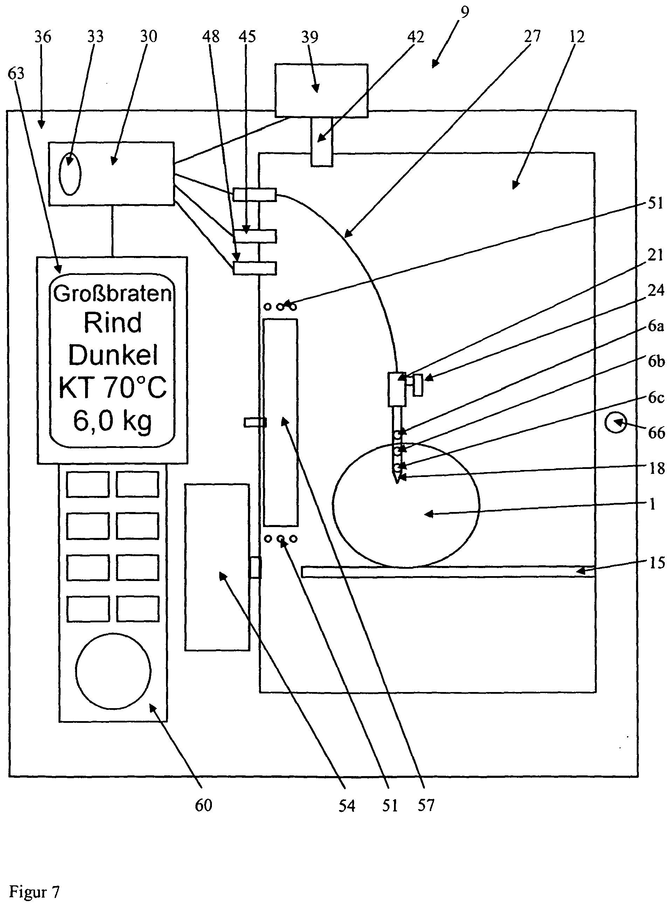

Figur 7 zeigt ein erfindungsgemäßes Gargerät 9, in dessen Garraum 12 ein Gargut 1 auf einem Gargutträger 15 liegt. In das Gargut 1 ist ein Temperatursensorspieß 3 eingeführt, der mit drei Temperatursensoren 6a, 6b, 6c in der Lanze 18 des Temperatursensorspießes 3 ausgestattet ist. In dem hier aufgeführten Beispiel liegen zwei der Temperatursensoren 6b, 6c innerhalb des Garguts 1, während einer der Temperatursensoren 6a außerhalb des Garguts 1 plaziert ist. Am Griff 21 des Temperatursensorspießes 3 ist ein weiterer Sensor in Form eines Infrarotsensors 24 angebracht, mit dessen Hilfe die Oberflächentemperatur des Garguts 1 bestimmt werden kann. Der Temperatursensorspieß 3 ist mit allen drei Temperatursensoren 6a, 6b, 6c und dem Infrarotsensor 24 über ein Kabel 27 mit einer Recheneinheit 30 verbunden, die ihrerseits mit einem Speicher 33 verbunden ist. Die Recheneinheit 30 und der Speicher 33 sind in einem Installationsraum 36 des Gargeräts 9 untergebracht.

Die Recheneinheit 30 ist zusätzlich verbunden mit einem optischen Sensor 39, der über eine Optik 42 das Innere des Garraums 12 überwacht. Des weiteren stehen auch noch ein Garraumtemperatursensor 45 zur Bestimmung der Garraumtemperatur und ein Gassensor 48 zur Überwachung der Garraumatmosphäre mit dem Garraum 12 mit der Rechercheneinheit 30 in Verbindung. Die Recheneinheit 30 beinhaltet einen Zeitgeber und ist in der Lage, die Daten aller Sensoren 6a, 6b, 6c, 24, 39, 45, 48 zu verarbeiten, einschließlich deren zeitlichen Entwicklungen, und gegebenenfalls im Speicher 33 zwischenzuspeichern. Die Rohdaten und die durch Berechnungen gewonnenen Werte können mit hinterlegten Werten aus dem Speicher 33 verglichen werden. Die Recheneinheit 30 kann auch alle für einen Vergleich notwendigen Rechenformeln und Kurvenverläufe aus dem Speicher 33 laden. Auf Grund der bei der Auswertung gewonnenen Informationen kann die Recheneinheit 30 sowohl eine Heizung 51 als auch einen Dampfgenerator 54 und ein Lüfterrad 57 ansteuern, so daß im Garraum 12 das für das Gargut 1 geeignete Klima bezogen auf Temperatur, Feuchte und Luftgeschwindigkeit herrscht.

Des weiteren ist die Recheneinheit 30 mit einer Eingabeeinrichtung 60 und einer Anzeigeeinrichtung 63 verbunden. Ein Anwender kann über die Eingabeeinrichtung 60 sowohl ein geeignetes Garprogramm und seine Wunschparameter, wie z. B. Kerntemperatur und Bräunung des Lebensmittels, auswählen, als auch zusätzliche Angaben zum Gargut machen, die geeignete Informationen zu den Randbedingungen der durch die Recheneinheit 30 zu lösenden Gleichungen liefert. Auf der Anzeige 63 kann der Anwender kontrollieren, welche Eingaben er getätigt hat.

Über die Anzeigeeinrichtung 63 können dem Anwender auch verschiedene andere Angaben angezeigt werden. Dazu zählen insbesondere der Name des ablaufenden Programms, die Einstellung der Wunschparameter, die aktuelle Kerntemperatur des Garguts 1, und die voraussichtliche Dauer des Garprozesses, die aus den Gleichungen (4), (5) und (7) berechnet werden kann, sobald die Temperatur im Kern des Garguts 1 bestimmt werden konnte und deren Verlauf über einen gewissen Zeitraum durch die Recheneinheit 30 verfolgt wurde.

Ein Anwender kann also zunächst über die Eingabeeinrichtung 60 ein geeignetes Garprogramm auswählen, die Wunschparameter einstellen und diese Eingaben über die Anzeige 63 kontrollieren. Die Recheneinheit 30 wird sodann ein geeignetes Garprogramm aus dem Speicher 33 laden und ein geeignetes Anfangsklima im Garraum 12 vorbereiten, indem der Garraum 12 über die Heizung 51 geheizt und die gewünschte Anfangsfeuchte mit Hilfe des Dampfgenerators 54 eingestellt wird. Die Temperatur im Garraum 12 wird über den Garraumtemperaturfühler 45 kontrolliert und die Feuchte über den Gassensor 48. Sobald die geeigneten Klimaparameter im Garraum 12 erreicht sind, erzeugt die Recheneinheit 30 auf der Anzeigeeinrichtung 63 eine Aufforderung an den Anwender, das Gargerät 9 mit dem Gargut 1 zu beladen und den Temperatursensorspieß 3 in das Gargut 1 einzustecken.

Aus den Kundeneingaben ist der Recheneinheit 30 bereits bekannt, daß es sich bei dem zu garenden Gargut 1 beispielsweise um einen Großbraten aus Rindfleisch handelt, der bis zu einer Kerntemperatur von 70° C gegart werden soll und nach dem Garen eine dunkle Bräunung aufweisen soll. Des weiteren hat der Anwender nach einer entsprechenden Aufforderung beispielsweise eingegeben, daß das Gargut 1 in etwa 6kg wiegt.

Sobald das Gargut 1 in den Garraum 12 eingebracht wurde, was für das Gargerät 9 z. B. an dem Schließen der Garraumtür (nicht gezeigt) mit Hilfe eines Türkontaktschalters 66, der ebenfalls mit der Recheneinheit 30 verbunden ist, zu erkennen ist, wird ein geeignetes Garprogramm, das zuvor aus dem Speicher 33 geladen wurde, gestartet. Dabei wird z. B. zuerst überprüft, ob der Temperatursensorspieß 3 in das Gargut 1 eingesteckt wurde. Sollte dies nicht der Fall sein, wird auf der Anzeigeeinrichtung 63 der entsprechende Fehler angezeigt und das Garprogramm abgebrochen. Ansonsten wird mit dem Garprogramm fortgefahren.

Der optische Sensor 39 ermittelt über die Optik 42 die Form des Garguts 1. Dazu sind solche optischen Sensoren besonders geeignet, die nicht nur über eine einzige Optik 42 verfügen, sondern das Gargut 1 aus verschiedenen Blickwinkeln aufnehmen können, um ein dreidimensionales Bild des Garguts 1 liefern zu können.

Aus den Informationen des optischen Sensors 39 und der Kundeneingaben wählt die Recheneinheit 30 ein geeignetes Berechnungsverfahren aus, das zur Bestimmung der Kerntemperatur geeignet ist.

Während des Garens wird nicht nur die Temperatur im Inneren des Garguts 1 ansteigen, was von der Recheneinheit 30 mit Hilfe der Temperatursensoren 6b, 6c verfolgt wird, sondern sich auch die Zusammensetzung der Garraumatmosphäre ändern, was mit Hilfe des Gassensors 48 verfolgt wird. Auch die Oberflächentemperatur des Garguts 1 wird sich ändern, was mit Hilfe des Infrarotsensors 24 verfolgt werden kann. Anhand der zeitlichen Entwicklung der Temperatur im Gargut 1 kann dann die Kerntemperatur des Garguts 1 wie beschrieben berechnet werden.

Dabei können alternativ zu den in den Gleichungen 4, 5, 6, 7 angegebenen Lösungen (Lösung von Gröber) auch einfachere Lösungen, wie z. B. nach den Differenzverfahren nach Schmidt (vgl. Günther Maier und Erich Schiffner in "technische Thermodynamik", dritte Auflage, Seiten 294-302), in der DE 19 609 116 A1 vorgeschlagenen (das Crank-Nicolson-Verfahren oder das ADI-Verfahren) oder dergleichen Lösungsverfahren zur Bestimmung der Kerntemperatur, zum Einsatz kommen. Sobald die Kerntemperatur im Gargut 1 bestimmt werden kann, kann sie auf der Anzeigeeinrichtung 63 angezeigt werden.

Sobald die Zielkerntemperatur erreicht ist, wird das Garprogramm beendet und eine entsprechende Anzeige zusammen mit der Aufforderung zum Entnehmen des Garguts 1 aus dem Garraum 12 durch die Recheneinheit 30 auf der Anzeigeeinrichtung 63 angezeigt.

In dem Speicher 33 können neben den Garprogrammen zur Steuerung des Gargeräts 9 und den Rechenformeln und Kurvenverläufen auch die Vergangenheitsdaten von bereits abgelaufenen Programmen und Prozessen für den Zugriff der Recheneinheit 30 hinterlegt sein. Hat ein Kunde ein selbst programmiertes, ein modifiziertes oder ein voreingestelltes Garprogramm z. B. mit dem Namen "Kalbsbraten" belegt, so ist davon auszugehen, daß dieses Garprogramm auch zukünftig für Kalbsbraten verwendet wird. Aus den während eines Garprozesses anhand der Sensoren 6a, 6b, 6c, 24, 39, 45, 48 gemessenen Daten lassen sich nach der Auswertung dieser Daten durch die Recheneinheit 30 für einen spezifischen Garprozeß typische Randbedingungen und der zeitliche Verlauf der Kerntemperatur im Speicher 33 speichern. Diese Daten können bei einer Verwendung des gleichen oder eines ähnlichen Garprozesses wieder abgerufen werden, um geeignete Randbedingungen zu setzen oder für das Problem passende Lösungen der Wärmeleitungsgleichung zu finden. Dabei kann eine für Garprogramme geeignete Clusteranalyse verwendet werden, wie sie insbesondere in der WO 2004/062372 A3 vorgeschlagen ist.

In einem weiteren Ausführungsbeispiel, das sich Anhand von Figur 7 erklären läßt, wird das Gargut 1 zunächst in den Garraum 12 eingebracht und dann wird der Temperatursensorspieß 3 in das Gargut 1 eingesteckt. Der Gassensor 48 mißt die Veränderung der Atmosphäre im Garraum 12, die durch das Gargut 1 verursacht wird. Dabei wird eine Vorauswahl durch die Recheneinheit 30 getroffen, die das Signalmuster des Gassensors 48 mit einem im Speicher 33 hinterlegten Signalmuster vergleicht. Dabei kommt als Gassensor 48 ein Gassensorsystem zum Einsatz, wie es zum Beispiel in der WO 2006/069563 A1 vorgeschlagen ist. Die Recheneinheit 30 erkennt also z. B., daß es sich bei dem Gargut 1 um Rindfleisch handelt, und zeigt dies auf der Anzeigeeinrichtung 63 an.

Gleichzeitig wird mit Hilfe des optischen Sensors 39 die Größe des Garguts 1 bestimmt, wobei zum Beispiel ein großes Fleischstück erkannt wird. Also wird auf der Anzeigeeinrichtung 63 ein Garprogramm für Großbraten vorgeschlagen. Die Recheneinheit 30 lädt das geeignete Garprogramm aus dem Speicher 33 und setzt typische Default-Werte für die Kerntemperatur und die Bräunung (z. B. KT 70°C und Dunkel). Das Garprogramm wird anschließend gestartet. Während des Garprogramms kann mit Hilfe des Gassensors 48 und des optischen Sensors 39 eine genauere Spezifizierung des Garguts 1 durch einen Vergleich der Sensordaten mit Mustersensordaten aus dem Speicher 33 durch die Recheneinheit 30 durchgeführt werden. Das Gargrogramm kann dann angepaßt werden, indem die Recheneinheit 30 Modifikationen für das Garprogramm aus dem Speicher 33 lädt, die zu den gemessenen Sensordaten passen. Dem Anwender wird die Möglichkeit gegeben, diese Einstellungen über die Eingabeeinrichtung 60 zu verändern.

Mit dem geeigneten Garprogramm wird auch eine geeignete Lösung oder Näherungslösung für die Wärmeleitungsgleichung zur Bestimmung der Kerntemperatur aus dem Speicher 33 in die Recheneinheit 30 geladen. Aus dem zeitlichen Verhalten der über die Temperatursensoren 6b, 6c im Gargut 1 erfaßten Temperaturwerte wird dann die Kerntemperatur des Garguts 1 berechnet. Welche der Temperatursensoren 6a, 6b, 6c sich innerhalb des Garguts 1 befinden, kann zum Beispiel einfach dadurch bestimmt werden, daß bei einem Anstieg der Temperatur eines der Temperatursensoren 6a, 6b, 6c auf eine Temperatur über 100 °C dieser als außerhalb des Garguts liegend definiert wird. Die bestimmte Kerntemperatur kann dann zur Steuerung des Garprozesses bzw. des Garprogramms verwendet werden.

Wird anhand einer Temperaturdifferenz zwischen den im Gargut 1 liegenden Temperatursensoren 6b, 6c festgestellt, daß das Gargut 1 außen bereits wärmer ist, also das Gargut 1 zu Beginn des Garprozesses bereits erwärmt war, kann diese Information zur Verbesserung der Lösung oder der Näherungslösung der Wärmeleitungsgleichung verwendet werden, z. B. indem ein Korrekturterm für die Zeit addiert wird. Dabei können auch weitere Informationen durch andere Sensoren diese Information bestätigen oder präzisieren. So kann beispielsweise mit Hilfe des Gassensors 48 festgestellt werden, ob sich bereits vor dem Beginn des Garprozesses ein Bratgeruch eingestellt hat, was ein Hinweis auf ein Gargut 1 ist, das bereits vor dem Beladen in einer Pfanne angebraten wurde. Die gleiche Information läßt sich aber auch mit Hilfe des Infrarotsensors 24 aus der Oberflächentemperatur des Garguts 1 gewinnen oder anhand der Färbung der Oberfläche des Garguts 1 mit Hilfe des optischen Sensors 39.

Aber auch ohne die Informationen von weiteren Sensoren 24, 39, 45, 48 ist das erfindungsgemäße Verfahren mit Hilfe von Annahmen und/oder Kundeneingaben durchführbar. Der Kunde wählt über die Eingabeeinrichtung 60 ein Großbratenprogramm aus und gibt auch die Ziel-Kerntemperatur und die gewünschte Bräunung des Garguts 1 ein. Die Recheneinheit 30 lädt aus dem Speicher 33 neben dem ausgewählten Garprogramm auch die typische Form eines Großbratens (z.B. Kugel oder Elypsoid) als Randbedingung. Wird statt dessen ein Garprogramm "Kurzgebratenes" ausgewählt, lädt die Recheneinheit 30 die Randbedingung für einen plattenförmigen oder einer zylinderförmigen Körper. Die Homogenität des Garguts 1 hinsichtlich Wärmeleitung und Wärmekapazität wird vorausgesetzt. Des weiteren kann entweder eine für Fleisch typische temperaturunabhängige Wärmeleitfähigkeit aus dem Speicher 33 geladen werden, oder auch die Funktion der Wärmeleitfähigkeit von Fleisch in Abhängigkeit der Temperatur. Die Temperaturverteilung zu Beginn des Garens wird mit Hilfe eines einzigen Temperatursensors 6 im Gargut 1 abgeschätzt oder als konstant im gesamten Gargut vorausgesetzt, die Temperatur an der Oberfläche des Garguts wird als 100 °C angenommen. Während der Erwärmung des Garguts 1 wird ein Temperaturverlauf über den Temperatursensor 6 gemessen und im Falle eines Grossbratens mit Hilfe von Gleichung (7) ausgewertet. Dank der dimensionslosen Parameter, die in Gleichung (7) verwendet werden, ist es nicht notwendig, die Grösse des Garguts 1 oder die Wärmeleitfähigkeit des Garguts 1 zu wissen. Die Kerntemperatur des Garguts kann einfach für den Fall $\xi = 0$ ausgerechnet werden. In dem Fall, dass der Kunde zuvor ein Garprogramm für Kurzgebratenes ausgewählt hatte, wird dagegen Gleichung (4) oder Gleichung (5) mit der Bedingung $\xi = 0$ zur Bestimmung der Kerntemperatur verwendet.

Bei einer bestimmten Form des zeitlichen Verlaufs des Temperaturanstiegs im Gargut 1 wäre es also möglich, dass das Gargut 1 eine grosse Wärmeleitfähigkeit hat, der Temperatursensor 6 tief im Gargut 1 steckt und das Gargut 1 einen grossen Durchmesser aufweist. Das Gargut 1 könnte bei der gleichen Form des zeitlichen Verlaufs des Temperaturanstiegs aber auch eine kleine Wärmeleitfähigkeit haben, der Temperatursensor 6 dichter an der Oberfläche des Garguts 1 stecken und das Gargut 1 einen kleinen Durchmesser haben. Die Kerntemperatur am Ort $\xi$ gleich Null wäre in beiden Fällen jedoch gleich, wie sich auch unmittelbar aus Gleichung (7) ergibt.

**Bezugzeichenliste**

| | |
|---|---|
| 1 | Gargut |
| 3 | Temperatursensorspieß |
| 6, 6a, 6b, 6c | Temperatursensoren |
| 9 | Gargerät |
| 12 | Garraum |
| 15 | Gargutträger |
| 18 | Lanze des Temperatursensorspießes |
| 21 | Griff |
| 24 | Infrarotsensor |
| 27 | Kabel |
| 30 | Recheneinheit |
| 33 | Speicher |
| 36 | Installationsraum |
| 39 | Optischer Sensor |
| 42 | Optik |
| 45 | Garraumtemperatursensor |
| 48 | Gassensor |
| 51 | Heizung |
| 54 | Dampfgenerator |
| 57 | Lüfterrad |
| 60 | Eingabeeinrichtung |
| 63 | Anzeigeeinrichtung |
| 66 | Türkontaktschalter |
| I, II, III | Isotherme |
| K | Kern |

**Patentansprüche**

1. Verfahren zur Bestimmung der Kerntemperatur eines Garguts (1) während eines Garprozesses in einem Gargerät (9), das mindestens einen in das Gargut (1) zumindest teilweise einführbaren Temperatursensor (6), eine Recheneinheit (30) und einen Speicher (33) umfasst, wobei während des Garprozesses das Gargut (1) zumindest zeitweise von außen nach innen erwärmt wird, zumindest eine Temperatur mit Hilfe des Temperatursensors (6) an wenigstens einer beliebigen Stelle im Inneren des Garguts (1) zu mindestens zwei Zeitpunkten oder kontinuierlich gemessen wird, und zur Bestimmung der Kerntemperatur aus den gemessenen Temperaturen eine die Diffusion von thermischer Energie beschreibende Wärmeleitungsgleichung zumindest näherungsweise gelöst wird, wobei

zumindest zwei das Auffinden von Lösungen der Wärmeleitungsgleichung ermöglichende Randbedingungen für die Lösung der Wärmeleitungsgleichung gewonnen werden durch Methoden ausgewählt aus der Gruppe umfassend Vorgabe über eine Eingabeeinrichtung (60), Vorgabe über eine Einleseeinrichtung des Gargeräts (9), Vorgabe über eine Einleseeinrichtung eines mit dem Gargerät (9) in Wirkverbindung stehenden Geräts, Bestimmung durch Auswertung von Messdaten wenigstens eines weiteren Sensors (24, 39, 42, 45, 48) während des Garprozesses und Festlegen durch aus vorherigen Garprozessen gewonnenen Erfahrungswerten, wobei

die Randbedingungen ausgewählt sind aus der Gruppe umfassend die Größe des Garguts (1), die Form des Garguts (1), das Gewicht des Garguts (1), den Typ des Garguts (1), die Art des Garguts (1), die Wärmekapazität des Garguts (1), die thermische Diffusivität im Gargut (1), die Wärmeleitfähigkeit des Garguts (1), die spezifische Wärme des Garguts (1), die Temperatur an der Oberfläche des Garguts (1), die Temperatur eines Garmediums im Gargerät (9), den Wärmeübertrag von einem Garmedium auf das Gargut (1), die Dichte des Garguts (1), die Position des Garguts (1) im Garraum (12), die Anzahl an Gargutstücken, die Oberflächenstruktur des Garguts (1) und die Vorbehandlung des Garguts (1).

2. Verfahren nach Anspruch 1, **dadurch gekennzeichnet, dass** die bestimmte Kerntemperatur zur Steuerung des Garprozesses verwendet und/oder auf einer Anzeigeeinrichtung (63), insbesondere des Gargeräts (9), angezeigt und/oder, vorzugsweise im Speicher (33), gespeichert wird.

3. Verfahren nach Anspruch 1 oder 2, **dadurch gekennzeichnet, dass** die Form des Garguts (1) und die thermische Diffusivität des Garguts (1) oder die Form des Garguts (1) und die Wärmeleitfähigkeit des Garguts (1) als Randbedingungen, zumindest näherungsweise, vorgegeben, bestimmt und/oder festgelegt werden.

4. Verfahren nach einem der vorangehenden Ansprüche, **dadurch gekennzeichnet, dass** die Temperatur der Oberfläche des Garguts (1) der Siedetemperatur von Wasser, insbesondere 100 °C, gleichgesetzt wird.

5. Verfahren nach einem der vorangehenden Ansprüche, **dadurch gekennzeichnet, dass** als Parameter der Lösung der Wärmeleitungsgleichung normierte, dimensionslose Größen für die Zeit, den Ort im Gargut (1) und/oder den Wärmeübergang von einem Garmedium auf das Gargut (1) zur Bestimmung der Kerntemperatur verwendet wird bzw. werden.

6. Verfahren nach einem der vorangehenden Ansprüche, **dadurch gekennzeichnet, dass** von einem homogenen Gargut (1) ausgegangen wird.

7. Verfahren nach einem der vorangehenden Ansprüche, **dadurch gekennzeichnet, dass** der Beginn des Anstiegs der Temperatur, die Geschwindigkeit des Anstiegs der Temperatur und/oder die Beschleunigung des Anstiegs der Temperatur aus den Messdaten des Temperatursensors ausgewertet wird bzw. werden.

8. Verfahren nach einem der vorangehenden Ansprüche, **dadurch gekennzeichnet, dass** die Lösung der Wärmeleitungsgleichung während des Garprozesses verbessert wird durch Auswertung der Messdaten des weiteren Sensors (24, 39, 42, 45, 48).

9. Verfahren nach einem der vorangehenden Ansprüche, **dadurch gekennzeichnet, dass** über den weiteren Sensor (24, 39, 42, 45, 48), insbesondere in Form eines optischen Sensorsystems (39, 42), die Form, Größe, Position und/oder Farbe des Garguts (1), insbesondere in Form eines Gassensorsystems (48) der chemische Zustand des Garguts (1) über die Gasatmosphäre des Garraums (12), insbesondere in Form eines Temperatursensors (24) die Oberflächentemperatur des Garguts (1) oder die Garraumtemperatur, insbesondere in Form eines Feuchtesensors die Feuchte in der Garraumatmosphäre, insbesondere in Form eines Impedanzsensors der elektrische Zustand des Garguts (1) und/oder, insbesondere in Form eines Ultraschallsensors die Form, Größe und/oder Position des Garguts (1) bestimmt wird bzw. werden.

10. Verfahren nach einem der vorangehenden Ansprüche, **dadurch gekennzeichnet, dass** eine Vorgabe zumindest einer Randbedingung durch Auswahl über ein Bedienmenu auf einer Bedienoberfläche am Gargerät (9), einer Fernbedienung des Gargeräts (9) und/oder einem mit dem Gargerät (9) verbundenen Computer erfolgt.

11. Verfahren nach einem der vorangehenden Ansprüche, **dadurch gekennzeichnet, dass** die Vorgabe zumindest einer Randbedingung durch Einlesen eines Codes, wie in Form eines Strichcodes, oder über Funk, insbesondere über einen RFID-Chip, erfolgt.

12. Verfahren nach einem der vorangehenden Ansprüche, **dadurch gekennzeichnet, dass** das Programm, mit dem das Gargut gegart wird, als Randbedingung vorgegeben, bestimmt und/oder festgelegt wird oder aus den vorgegebenen, bestimmten und/oder festgelegten Randbedingungen bestimmt wird.

13. Verfahren nach Anspruch 12, **dadurch gekennzeichnet, dass** ein bestimmtes Programm angezeigt wird und/oder verändert werden kann.

**14.** Verfahren nach Anspruch 13, **dadurch gekennzeichnet, dass** während eines Garprozesses das Programm in Abhängigkeit von Messdaten des Temperatursensors (6) und/oder des weiteren Sensors (24, 39, 42, 45, 48) geändert wird.

**15.** Verfahren nach einem der vorangehenden Ansprüche, **dadurch gekennzeichnet, dass** die Lösung und/oder das Lösungsverfahren der Wärmeleitungsgleichung von der Anzahl und der Art der bestimmten Randbedingungen abhängt.

**16.** Verfahren nach einem der vorangehenden Ansprüche, **dadurch gekennzeichnet, dass** zumindest zwei Temperatursensoren (6, 6a, 6b, 6c) im Inneren des Garguts (1) platziert werden.

**17.** Verfahren nach Anspruch 16, **dadurch gekennzeichnet, dass** in Vergleich der aus den Messdaten der Temperatursensoren (6, 6a, 6b, 6c) berechneten Kerntemperaturen durchgeführt wird, um daraus eine Abschätzung für die Güte der Kerntemperaturbestimmung, Informationen zu dem Gargut (1) und/oder weitere und/oder veränderte Randbedingungen für die Lösung der Wärmeleitungsgleichung zu erhalten.

**18.** Verfahren nach Anspruch 17, **dadurch gekennzeichnet, dass** die Güte der Kerntemperaturbestimmung, die Information zu dem Gargut (1) und/oder die Randbedingungen für die Lösung der Wärmeleitungsgleichung nach Veränderung der Randbedingungen erneut berechnet, angezeigt und/oder gespeichert werden.

**19.** Verfahren nach Anspruch 18, **dadurch gekennzeichnet, dass** die Veränderung und Berechnung sooft wiederholt werden, bis die berechneten Werte auf einen Endwert zu konvergieren.

**20.** Verfahren nach einem der Ansprüche 16 bis 19, **dadurch gekennzeichnet, dass** die zumindest zwei Temperatursensoren (6, 6a, 6b, 6c) im Gargut (1) einen bekannten Abstand voneinander haben, und aus dem Abstand der Temperatursensoren die Wärmeleitung im Gargut (1) bei bekannter Größe und Form des Garguts (1) oder die Größe des Garguts (1) bei bekannter Form und Wärmeleitung des Garguts (1) bestimmt wird.

**21.** Verfahren nach einem der vorangehenden Ansprüche, **dadurch gekennzeichnet, dass** zumindest drei Temperatursensoren (6a, 6b, 6c) auf einer Geraden innerhalb des Garguts (1) platziert werden können, wobei die Messdaten der Temperatursensoren (6a, 6b, 6c) zur Bestimmung eines Temperaturgradienten im Inneren des Garguts (1), des zeitlichen Verlaufs des Temperaturgradienten, des Zeitpunkts, bei dem sich ein definierter Temperaturgradient einstellt, und/oder der Kerntemperatur des Garguts (1) berücksichtigt werden.

**22.** Verfahren nach einem der vorangehenden Ansprüche, **dadurch gekennzeichnet, dass** die Messdaten jedes Temperatursensors (6a, 6b, 6c), die Messdaten des weiteren Sensors (24, 39, 42, 45, 48) und/oder die vorgegebenen, bestimmten, festgelegten und/oder veränderten Randbedingungen und/oder die Lösungen der ausgewählten Wärmeleitungsgleichungen gespeichert werden können, insbesondere zusammen mit einer Programmbezeichnung.

**23.** Gargerät zur Behandlung eines Garguts (1) in einem Garraum (12), umfassend wenigstens einen im Garraum (12) plazierbaren Temperatursensor (6), der zur Bestimmung der Temperatur an wenigstens einer beliebigen Stelle im Inneren des Garguts (1) geeignet ist, eine Recheneinheit (30), einen Speicher (33) und eine Heizeinrichtung (51), zum Durchführen eines Verfahrens nach einem der vorangehenden Ansprüche.

**24.** Gargerät nach Anspruch 23, **gekennzeichnet durch** zumindest einen zusätzlichen Sensor, insbesondere ausgewählt aus einem Gassensorsystem (48) zur Bestimmung des chemischen Zustands des Garguts (1) über die Gasatmosphäre des Garraums (12), einem optischen Sensorsystem (39, 42) zur Bestimmung der Form, Größe, Position und/oder Farbe des Garguts (1), einem ersten Temperatursensor (24) zur Bestimmung der Oberflächentemperatur des Garguts (1), einem zweiten Temperatursensor (45) zur Bestimmung des Garraumtemperatur, einem Feuchtesensor zur Bestimmung der Feuchte in der Garraumatmosphäre, einem Impedanzsensor zur Bestimmung des elektrischen Zustands des Garguts (1) und/oder einem Ultraschallsensor zur Bestimmung der Form, Größe und/oder Position des Garguts (1).

**25.** Gargerät nach Anspruch 23 oder 24, **gekennzeichnet durch** zumindest eine Eingabeeinrichtung (60), eine Anzeigeeinrichtung (63) und/oder eine Leseeinrichtung, jeweils in Wirkverbindung mit der Recheneinheit 30.

26. Gargerät nach Anspruch 25, **dadurch gekennzeichnet, dass**
die Eingabeeinrichtung (60) und die Anzeigeeinrichtung (63) in einem Bedienelement bereitgestellt sind, und/oder
die Leseeinrichtung zum Lesen eines Strichcodes und/oder eines RFID-Chips geeignet ist.

27. Gargerät nach einem der vorangehenden Ansprüche, **dadurch gekennzeichnet, dass** zumindest zwei in dem Gargut (1) plazierbare Temperatursensoren (6a, 6b, 6c) vorgesehen sind, wobei die zumindest zwei Temperatursensoren (6a, 6b, 6c) vorzugsweise an oder in einem Temperatursensorspieß (3) jeweils in einem definierten Abstand voneinander angeordnet sind.

28. Gargerät nach Anspruch 27, **dadurch gekennzeichnet, dass**
zumindest drei in einem Gargut (1) plazierbare Temperatursensoren (6a, 6b, 6c) vorgesehen sind.

29. Gargerät nach einem der Ansprüche 23 bis 28, **gekennzeichnet durch**
eine Kühleinrichtung, eine Einrichtung zum Zuführen von Feuchtigkeit in den Garraum, eine Einrichtung zum Abführen von Feuchtigkeit aus dem Garraum, eine Einrichtung zum Zirkulieren von Garraumatmosphäre, einen Wärmespeicher, eine Garraumtür mit Türkontaktschalter und/oder eine Reinigungseinrichtung.

**Claims**

1. A method for determining the core temperature of food to be cooked (1) during a cooking process in a cooking device (9), comprising at least one temperature sensor (6) which can be at least partially introduced into the food to be cooked (1), one computing unit (30) and one memory (33), wherein the food to be cooked (1) is heated at least temporarily from outside to inside during the cooking process, at least one temperature is measured in at least one arbitrary location in the inside of the food to be cooked (1) at at least two points in time or continuously with the aid of the temperature sensor (6) and, in order to determine the core temperature from the measured temperatures, a heat conduction equation which describes the diffusion of thermal energy is solved at least approximately,
wherein
at least two boundary conditions for solving the heat conduction equation, which make it possible to find solutions to the heat conduction equation, are obtained by means of methods which are selected from the group comprising presetting by means of an input device (60), presetting by means of a reading device of the cooking device (9), presetting by means of a reading device of a device which is in operative connection with the cooking device (9), determination by evaluating measurement data of at least one additional sensor (24, 39, 42, 45, 48) during the cooking process and specification by empirical values obtained from previous cooking processes,
wherein
the boundary conditions are selected from the group comprising the size of the food to be cooked (1), the shape of the food to be cooked (1), the weight of the food to be cooked (1), the type of the food to be cooked (1), the nature of the food to be cooked (1), the thermal capacity of the food to be cooked (1), the thermal diffusivity in the food to be cooked (1), the thermal conductivity of the food to be cooked (1), the specific heat of the food to be cooked (1), the temperature on the surface of the food to be cooked (1), the temperature of a cooking medium in the cooking device (9), the heat exchange from a cooking medium to the food to be cooked (1), the density of the food to be cooked (1), the position of the food to be cooked (1) in the cooking chamber (12), the number of items of food to be cooked, the surface structure of the food to be cooked (1) and the preparatory treatment of the food to be cooked (1).

2. The method according to Claim 1, **characterized in that**
the determined core temperature is used for controlling the cooking process and/or is displayed on a display device (63), in particular of the cooking device (9), and/or is stored, preferably in the memory (33).

3. The method according to Claim 1 or 2, **characterized in that**
the shape of the food to be cooked (1) and the thermal diffusivity of the food to be cooked (1) or the shape of the food to be cooked (1) and the thermal conductivity of the food to be cooked (1) are preset, determined and/or specified, at least approximately, as boundary conditions.

4. The method according to any one of the preceding claims, **characterized in**
**that** the temperature of the surface of the food to be cooked (1) is equated to the boiling temperature of water, in particular 100°C.

5. The method according to any one of the preceding claims, **characterized in that** normalized, non-dimensional variables for the time, the location in the food to be cooked (1) and/or the heat exchange from a cooking medium to the food to be cooked (1) is or are used as parameter(s) of the solution of the heat conduction equation in order to determine the core temperature.

6. The method according to any one of the preceding claims, **characterized in that** the assumption is made that the food to be cooked (1) is homogeneous.

7. The method according to any one of the preceding claims, **characterized in that** the start of the increase of the temperature, the speed of the increase of the temperature and/or the acceleration of the increase of the temperature is/are evaluated from the measurement data of the temperature sensor.

8. The method according to any one of the preceding claims, **characterized in that** the solution to the heat conduction equation is improved during the cooking process by evaluating the measurement data of the additional sensor (24, 39, 42, 45, 48).

9. The method according to any one of the preceding claims, **characterized in that** there is/are determined by means of the additional sensors (24, 39, 42, 45, 48), in particular in the form of an optical sensor system (39, 42), the shape, size, position and/or color of the food to be cooked (1), in particular in the form of a gas sensor system (48) the chemical condition of the food to be cooked (1) via the gas atmosphere of the cooking chamber (12), in particular in the form of a temperature sensor (24) the surface temperature of the food to be cooked (1) or the cooking chamber temperature, in particular in the form of a humidity sensor the humidity in the cooking chamber atmosphere, in particular in the form of an impedance sensor the electrical condition of the food to be cooked (1) and/or, in particular in the form of an ultrasonic sensor the shape, size and/or position of the food to be cooked (1).

10. The method according to any one of the preceding claims, **characterized in that** a preset of at least one boundary condition is made by means of a selection via an operating menu on an operating surface on the cooking device (9), a remote operation of the cooking device (9) and/or a computer which is connected to the cooking device (9).

11. The method according to any one of the preceding claims, **characterized in that** the preset of at least one boundary condition is made by reading in a code, such as in form of a bar code, or by radio, in particular by means of an RFID chip.

12. The method according to any one of the preceding claims, **characterized in that** the program, with which the food to be cooked is cooked, is preset, determined and/or specified as a boundary condition, or is determined from the preset, determined and/or specified boundary conditions.

13. The method according to Claim 12, **characterized in that** a particular program is displayed and/or can be modified.

14. The method according to Claim 13, **characterized in that** the program is amended as a function of measurement data of the temperature sensor (6) and/or of the additional sensor (24, 39, 42, 45, 48) during a cooking process.

15. The method according to any one of the preceding claims, **characterized in that** the solution and/or the method of solving the heat conduction equation depend(s) on the number and the nature of the determined boundary conditions.

16. The method according to any one of the preceding claims, **characterized in that** at least two temperature sensors (6, 6a, 6b, 6c) are placed in the inside of the food to be cooked (1).

17. The method according to Claim 16, **characterized in that** a comparison of the core temperatures calculated from the measurement data of the temperature sensors (6, 6a, 6b, 6c) is performed, in order to obtain an appraisal of the quality of the core temperature determination, information regarding the food to be cooked (1) and/or additional and/or modified boundary conditions for solving the heat conduction equation.

18. The method according to Claim 17, **characterized in that** the quality of the core temperature determination, the information regarding the food to be cooked (1) and/or the boundary conditions for solving the heat conduction equation is/are recalculated, displayed and/or stored after modifying the boundary conditions.

**19.** The method according to Claim 18, **characterized in that**
the modification and calculation are repeated until such time as the calculated values converge to an end value.

**20.** The method according to any one of Claims 16 to 19, **characterized in that** the at least two temperature sensors (6, 6a, 6b, 6c) in the food to be cooked (1) have a known distance from one another, and the distance of the temperature sensors is used to determine the heat conduction in the food to be cooked (1) for a known size and shape of the food to be cooked (1) or to determine the size of the food to be cooked (1) for a known shape and heat conduction of the food to be cooked (1).

**21.** The method according to any one of the preceding claims, **characterized in that** at least three temperature sensors (6a, 6b, 6c) can be placed on a straight line inside the food to be cooked (1), wherein the measurement data of the temperature sensors (6a, 6b, 6c) is taken into consideration in order to determine a temperature gradient in the inside of the food to be cooked (1), the time-dependent course of the temperature gradient, the time at which a defined temperature gradient appears, and/or the core temperature of the food to be cooked (1).

**22.** The method according to any one of the preceding claims, **characterized in that** the measurement data of each temperature sensor (6a, 6b, 6c), the measurement data of the additional sensor (24, 39, 42, 45, 48) and/or the preset, determined, specified and/or modified boundary conditions and/or the solutions to the selected heat conduction equations can be stored, in particular together with a program name.

**23.** A cooking device for handling a food to be cooked (1) in a cooking chamber (12), comprising at least one temperature sensor (6) which can be placed in the cooking chamber (12), which temperature sensor is suitable for determining the temperature at at least one arbitrary location in the inside of the food to be cooked (1), one computing unit (30), one memory (33) and one heating device (51), for performing a method according to any one of the preceding claims.

**24.** The cooking device according to Claim 23, **characterized by** at least one additional sensor, in particular selected from a gas sensor system (48) for determining the chemical condition of the food to be cooked (1) via the gas atmosphere of the cooking chamber (12), an optical sensor system (39, 42) for determining the shape, size, position and/or color of the food to be cooked (1), a first temperature sensor (24) for determining the surface temperature of the food to be cooked (1), a second temperature sensor (45) for determining the cooking chamber temperature, a humidity sensor for determining the humidity in the cooking chamber atmosphere, an impedance sensor for determining the electrical condition of the food to be cooked (1) and/or an ultrasonic sensor for determining the shape, size and/or position of the food to be cooked (1).

**25.** The cooking device according to Claim 23 or 24, **characterized by**
at least one input device (60), one display device (63) and/or one reading device which are each in operative connection with the computing unit (30).

**26.** The cooking device according to Claim 25, **characterized in that**
the input device (60) and the display device (63) are provided in an operating element, and/or the reading device is suitable for reading a bar code and/or a RFID chip.

**27.** The cooking device according to any one of the preceding claims, **characterized in that** at least two temperature sensors (6a, 6b, 6c) which can be placed in the food to be cooked (1) are provided, wherein the at least two temperature sensors (6a, 6b, 6c) are preferably arranged on or in a temperature sensor skewer (3) and are, in each case, at a defined distance from one another.

**28.** The cooking device according to Claim 27, **characterized in that**
at least three temperature sensors (6a, 6b, 6c) which can be placed in a food to be cooked (1) are provided.

**29.** The cooking device according to any one of Claims 23 to 28, **characterized by** a cooling device, a device for supplying moisture to the cooking chamber, a device for carrying away moisture from the cooking chamber, a device for circulating the cooking chamber atmosphere, a heat storage device, a cooking chamber door having a door contact switch and/or a cleaning device.

**Revendications**

1. Procédé de détermination de la température au coeur d'un article de cuisson (1) pendant un processus de cuisson dans un appareil de cuisson (9), lequel comprend au moins un capteur de température (6) insérable au moins partiellement dans l'article de cuisson (1), une unité de calcul (30) et une mémoire (33), où pendant le processus de cuisson l'article de cuisson (1) étant chauffé au moins périodiquement d'extérieur vers intérieur, au moins une température étant mesurée à l'aide du capteur de température (6) à au moins une place quelconque dans l'intérieur de l'article de cuisson (1), à au moins deux instants ou en continu, et, en vue de la détermination de la température au coeur à partir des températures mesurées, une équation de la chaleur décrivant la diffusion d'énergie thermique est résolue au moins approximativement, où
au moins deux conditions limites permettant la détermination de solutions de l'équation de la chaleur étant produites pour la solution de l'équation de la chaleur, par des méthodes sélectionnées parmi le groupe comprenant spécification par un dispositif d'entrée (60), spécification par un dispositif de lecture de l'appareil de cuisson (9), spécification par un dispositif de lecture d'un appareil étant en relation active avec l'appareil de cuisson (9), détermination par l'analyse des données de mesure d'au moins un capteur supplémentaire (24, 39, 42, 45, 48) pendant le processus de cuisson et établissement par des valeurs empiriques recueillies lors de processus de cuisson antérieurs, où
les conditions limites étant sélectionnées parmi le groupe comprenant la taille de l'article de cuisson (1), la forme de l'article de cuisson (1), le poids de l'article de cuisson (1), le type de l'article de cuisson (1), la capacité thermique de l'article de cuisson (1), la diffusivité thermique de l'article de cuisson (1), la conductivité thermique de l'article de cuisson (1), la chaleur spécifique de l'article de cuisson (1), la température à la surface de l'article de cuisson (1), la température d'un milieu de cuisson dans l'appareil de cuisson (9), le transfert de chaleur d'un milieu de cuisson à l'article de cuisson (1), la densité de l'article de cuisson (1), la position de l'article de cuisson (1) dans l'espace de cuisson (12), le nombre de pièces de l'article de cuisson, la structure de surface de l'article de cuisson (1) et le traitement préalable de l'article de cuisson (1).

2. Procédé selon la revendication 1, **caractérisé en ce que**
la température au coeur déterminé est utilisée pour la commande du processus de cuisson et/ou est affichée sur un dispositif d'affichage (63), en particulier de l'appareil de cuisson (9) et/ou enregistrée, de préférence dans la mémoire (33).

3. Procédé selon la revendication 1 ou 2, **caractérisé en ce que**
la forme de l'article de cuisson (1) et la diffusivité thermique de l'article de cuisson (1) ou la forme de l'article de cuisson (1) et la conductivité thermique de l'article de cuisson (1) sont prédéterminées, déterminées et/ou spécifiées comme conditions limites, au moins approximativement.

4. Procédé selon l'une quelconque des revendications précédentes, **caractérisé en ce que** la température de la surface de l'article de cuisson (1) est assimilée à la température d'ébullition de l'eau, en particulier 100 °C.

5. Procédé selon l'une quelconque des revendications précédentes, **caractérisé en ce que** des grandeurs normalisées, sans dimension pour le temps, la place dans l'article de cuisson (1) et/ou le transfert thermique d'un milieu de cuisson à l'article de cuisson (1) est ou sont utilisée(s) pour la détermination de la température au coeur, comme paramètres de la solution de l'équation de la chaleur.

6. Procédé selon l'une quelconque des revendications précédentes, **caractérisé en ce que** l'on part du principe que l'article de cuisson (1) est homogène.

7. Procédé selon l'une quelconque des revendications précédentes, **caractérisé en ce que** le début de l'augmentation de la température, la vitesse de l'augmentation de la température et/ou l'accélération de l'augmentation de la température est ou sont analysé(s) à partir des données de mesure du capteur de température.

8. Procédé selon l'une quelconque des revendications précédentes, **caractérisé en ce que** la solution de l'équation de la chaleur est améliorée pendant le processus de cuisson, par analyse des données de mesure du capteur supplémentaire (24, 39, 42, 45, 48).

9. Procédé selon l'une quelconque des revendications précédentes, **caractérisé en ce que**, par le capteur supplémentaire (24, 39, 42, 45, 48), en particulier sous la forme d'un système de capteur optique (39, 42) la forme, taille, position et/ou couleur de l'article de cuisson (1), en particulier sous la forme d'un système de capteur de gaz (48) l'état chimique de l'article de cuisson (1) par l'atmosphère gazeuse de l'espace de cuisson (12), en particulier sous la forme d'un capteur de température (24) la température de surface de l'article de cuisson (1) ou la température de l'espace de cuisson, en particulier sous la forme d'un capteur d'humidité l'humidité dans l'atmosphère de l'espace de cuisson, en particulier sous la forme d'un capteur d'impédance l'état électrique de l'article de cuisson (1) et/ou, en particulier sous la forme d'un capteur d'ultrasons la forme, taille et/ou position de l'article de cuisson (1) est ou sont déterminé(s),

10. Procédé selon l'une quelconque des revendications précédentes, **caractérisé en ce qu'**une prédétermination d'au moins une condition limite est effectuée par sélection par un menu de commande sur une interface utilisateur sur l'appareil de cuisson (9), par une télécommande de l'appareil de cuisson (9) et/ou par un ordinateur relié à l'appareil de cuisson (9).

11. Procédé selon l'une quelconque des revendications précédentes, **caractérisé en ce que** la prédétermination d'au moins une condition limite est effectuée par lecture d'un code, comme sous la forme d'un code-barres, ou par radio, en particulier par une puce RFID.

12. Procédé selon l'une quelconque des revendications précédentes, **caractérisé en ce que** le programme avec lequel l'article de cuisson est cuit est prédéterminé, déterminé et/ou spécifié comme condition limite ou est déterminé à partir des conditions limites prédéterminé, déterminées et/ou spécifié.

13. Procédé selon la revendication 12, **caractérisé en ce qu'**un programme déterminé est affiché et/ou peut être modifié.

14. Procédé selon la revendication 13, **caractérisé en ce que**, pendant un processus de cuisson, le programme est modifié en fonction des données de mesure du capteur de température (6) et/ou du capteur supplémentaire (24, 39, 42, 45, 48).

15. Procédé selon l'une quelconque des revendications précédentes, **caractérisé en ce que** la solution et/ou la méthode de résolution de l'équation de la chaleur est fonction du nombre et du type des conditions limites déterminées.

16. Procédé selon l'une quelconque des revendications précédentes, **caractérisé en ce qu'**au moins deux capteurs de température (6, 6a, 6b, 6c) sont placés à l'intérieur de l'article de cuisson (1).

17. Procédé selon la revendication 16, **caractérisé en ce qu'** une comparaison des températures au coeur calculées à partir des données de mesure des capteurs de température (6, 6a, 6b, 6c) est effectuée, pour obtenir une estimation pour la qualité de la détermination de la température au coeur, des informations relatives à l'article de cuisson (1) et/ou d'autres conditions limites et/ou des conditions limites modifiées, pour la solution de l'équation de la chaleur.

18. Procédé selon la revendication 17, **caractérisé en ce que** la qualité de la détermination de la température au coeur, l'information concernant l'article de cuisson (1) et/ou les conditions limites pour la solution de l'équation de la chaleur sont de nouveau calculées, affichées et/ou enregistrées, après modification des conditions limites.

19. Procédé selon la revendication 18, **caractérisé en ce que** la modification et le calcul sont répétés jusqu'à ce que les valeurs calculées convergent vers une valeur finale.

20. Procédé selon l'une des revendications 16 à 19, **caractérisé en ce que** les au moins deux capteurs de température (6, 6a, 6b, 6c) sont à une distance connue l'un de l'autre dans l'article de cuisson (1), et la conduction thermique dans l'article de cuisson (1), avec taille et forme de l'article de cuisson (1) connues, ou la taille de l'article de cuisson (1), avec forme et conduction thermique de l'article de cuisson (1) connues, est déterminée à partir de la distance entre les capteurs de température.

21. Procédé selon l'une quelconque des revendications précédentes, **caractérisé en ce qu'** au moins trois capteurs de température (6a, 6b, 6c) peuvent être placés sur une droite à l'intérieur de l'article de cuisson (1), où les données de mesure des capteurs de température (6a, 6b, 6c) étant prises en compte pour la détermination d'un gradient de température à l'intérieur de l'article de cuisson (1), du déroulement temporel du gradient de température, de l'instant auquel un gradient de température défini apparaît, et/ou de la température au coeur de l'article de cuisson (1).

**22.** Procédé selon l'une quelconque des revendications précédentes, **caractérisé en ce que**
les données de mesure de chaque capteur de température (6a, 6b, 6c), les données de mesure du capteur supplémentaire (24, 39, 42, 45, 48) et/ou les conditions limites prédéterminé, déterminé, spécifié et/ou modifiées et/ou les solutions des équations de la chaleur sélectionnées peuvent être enregistrées, en particulier conjointement à une désignation de programme.

**23.** Appareil de cuisson pour le traitement d'un article de cuisson (1) dans un espace de cuisson (12), comprenant au moins un capteur de température (6) pouvant être placé dans l'espace de cuisson (12), lequel est adapté à la détermination de la température en au moins un position quelconque à l'intérieur de l'article de cuisson (1), une unité de calcul (30), une mémoire (33) et un dispositif de chauffage (51), en vue de la réalisation d'un procédé selon l'une quelconque des revendications précédentes.

**24.** Appareil de cuisson selon la revendication 23, **caractérisé par**
au moins un capteur supplémentaire, en particulier sélectionné parmi d'un système de capteur de gaz (48) pour la détermination de l'état chimique de l'article de cuisson (1) par l'atmosphère gazeuse de l'espace de cuisson (12), d'un système de capteur optique (39, 42) pour la détermination de la forme, taille, position et/ou couleur de l'article de cuisson (1), d'un premier capteur de température (24) pour la détermination de la température de surface de l'article de cuisson (1), d'un deuxième capteur de température (45) pour la détermination de la température de l'espace de cuisson, d'un capteur d'humidité pour la détermination de l'humidité dans l'atmosphère de l'espace de cuisson, d'un capteur d'impédance pour la détermination de l'état électrique de l'article de cuisson (1) et/ou d'un capteur d'ultrasons pour la détermination de la forme, taille et/ou position de l'article de cuisson (1).

**25.** Appareil de cuisson selon la revendication 23 ou 24, **caractérisé par**
au moins un dispositif d'entrée (60), un dispositif d'affichage (63) et/ou un dispositif de lecture, respectivement en relation active avec l'unité de calcul (30).

**26.** Appareil de cuisson selon la revendication 25, **caractérisé en ce que**
le dispositif d'entrée (60) et le dispositif d'affichage (63) sont mis à disposition dans un élément de commande, et/ou le dispositif de lecture est adapté à la lecture d'un code-barres et/ou d'une puce RFID.

**27.** Appareil de cuisson selon l'une quelconque des revendications précédentes, **caractérisé en ce qu'**
au moins deux capteurs de températures (6a, 6b, 6c) pouvant être placés dans l'article de cuisson (1) sont prévus, où les au moins deux capteurs de température (6a, 6b, 6c) étant disposés de préférence sur ou dans un brochet de capteurs de température (3), respectivement à une distance définie les uns des autres.

**28.** Appareil de cuisson selon la revendication 27, **caractérisé en ce qu'**
au moins trois capteurs de température (6a, 6b, 6c) pouvant être placés dans un article de cuisson (1) sont prévus.

**29.** Appareil de cuisson selon l'une quelconque des revendications 23 à 28, **caractérisé par**
un dispositif de refroidissement, un dispositif pour l'apport d'humidité dans l'espace de cuisson, un dispositif pour l'évacuation d'humidité hors de l'espace de cuisson, un dispositif pour la circulation de l'atmosphère de l'espace de cuisson, un accumulateur de chaleur, une porte d'espace de cuisson avec contacteur de porte et/ou un dispositif de nettoyage.

Figur 1

Figur 2

Figur 3

Figur 4

Figur 5

Figur 6

Figur 7

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- EP 0687866 A1
- WO 9848679 A
- EP 0601137 B1
- DE 19945021 A1
- DE 10323651 A1
- DE 19609116 A1
- DE 10120136 A1
- DE 4216718 A1
- US 20060112833 A1
- EP 1253382 A1
- DE 19718399 A1
- WO 9316333 A1
- EP 1757862 A2
- DE 20321133 U1
- DE 10306940 A1
- DE 10109246 C1
- EP 0874198 A1
- GB 2244132 A
- EP 1793173 A1
- WO 2004106899 A1
- EP 1271061 A2
- EP 1927810 A1
- DE 202005017251 U1
- WO 0247522 A2
- WO 0223093 A1
- WO 2004062372 A3
- WO 2006069563 A1

### In der Beschreibung aufgeführte Nicht-Patentliteratur

- **THOMAS ROSSNER.** Automatisierung des Garprozesses von Fleisch. *TU Dresden,* 1987, 55-60
- Grundlagen der technischen Thermodynamik. **NORBERT ELSNER et al.** Wärmeübertragung. Akademieverlag GmbH, 1993, vol. 2, 83-94
- **GÜNTHER MAIER ; ERICH SCHIFFNER.** technische Thermodynamik. 294-302